# EUROPEAN PATENT SPECIFICATION

(11) **EP 3 062 560 B1**
(45) Date of publication and mention of the grant of the patent: **14.03.2018**
(21) Application number: 13897406.8
(22) Date of filing: 14.11.2013
(51) Int. Cl.: H04W 28/02

(54) **CONGESTION CONTROL METHOD, DEVICE, AND SYSTEM**
ÜBERLASTUNGSREGELUNGSVERFAHREN, VORRICHTUNG UND SYSTEM
PROCÉDÉ, DISPOSITIF ET SYSTÈME DE RÉGULATION DE CONGESTION

(43) Date of publication of application: 31.08.2016
(60) Divisional application: 18152260.8
(73) Proprietor: Huawei Technologies Co., Ltd., Longgang District Shenzhen, Guangdong 518129 (CN)
(72) Inventor: WANG, Shuo, Shenzhen Guangdong 518129 (CN); YU, Yijun, Shenzhen Guangdong 518129 (CN)
(74) Representative: Gill Jennings & Every LLP
(86) International application number: PCT/CN2013/087124
(87) International publication number: WO 2015/070414

(56) References cited:
- WO-A1-2012/109951
- CN-A- 101 977 416
- CN-A- 102 696 269
- VODAFONE: "Proposed new requirement for the provision of a MVNO Identifier", 3GPP DRAFT; S1-051115, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Los Angeles, CA, USA; 20051020, 20 October 2005 (2005-10-20), XP050224149, [retrieved on 2005-10-20]
- "3rd Generation Partnership Project; Technical Specification Group SA; Study on RAN Sharing Enhancements (Release 12)", 3GPP DRAFT; TR22 852 V1.4.0 FS_RSE (REVISIONS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 13 May 2013 (2013-05-13), XP050707821, Retrieved from the Internet: URL:http://www.3gpp.org/ftp/tsg_sa/WG1_Ser v/TSGS1_62_New_Delhi/docs/ [retrieved on 2013-05-13]
- "3rd Generation Partnership Project; Technical Specification Group Services and System Aspects; Feasibility study on user plane congestion management (Release 12)", 3GPP DRAFT; 22805-C10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 14 December 2012 (2012-12-14), XP050916268, Retrieved from the Internet: URL:http://www.3gpp.org/ftp/Specs/zItuInfo /M.2012-2/2014-12/Rel-12/22_series/ [retrieved on 2012-12-14]

## Description

### TECHNICAL FIELD

Embodiments of the present invention relate to the field of communications technologies, and in particular, to a congestion control method, an apparatus, and a system.

### BACKGROUND

As an opening pattern of a global telecommunications market forms, operator competition focuses on a contest for users, and therefore, a better service and more colorful business become weights in operator competition. Network investment is main expenditure of an operator; especially in a current situation in which mobile network traffic surges, an operator of a traditional mobile network needs to invest a huge amount of money to build and upgrade the network. In contrast, a pattern that a service can be launched by renting a network has an advantage of reducing investment costs. Appearance of a mobile virtual network operator (Mobile Virtual Network Operator, MVNO for short) provides a new pattern for network operation. The MVNO generally refers to an operator who has no operation license or whose development scale is limited and who needs to develop a user and provide a service for the user by using a network of an existing basic mobile network operator (Mobile Network Operator, MNO for short). A mobile network operator that has an operation license may also develop a user and provide a service by renting a network of another mobile network operator (which is also generally referred to as network sharing), and may also be considered as an MVNO. In a mature telecommunications market, increasing MVNOs appear.

With introduction of the MVNO, a network of an MNO may serve multiple MVNOs, and the MNO needs to manage network resources well for different MVNOs. For example, different radio access resources, maximum user quantities, maximum bearer (Bearer)/Packet Data Protocol (Packet Data Protocol, PDP for short)
resources, and available services are allocated to different MVNOs. The network resource may be represented by a number, for example, a maximum user quantity of an MVNO is 1000; or may be represented by a resource occupation ratio, for example, an MVNO may use 40% radio access resources of a mobile network. The MNO manages and controls network resources of different MVNOs according to the foregoing network resource management method, so as to ensure that all served MVNOs have sufficient available network resources. However, when a quantity of used resources of an MVNO reaches a preset value (maximum data, a maximum percentage, or the like), congestion occurs when the MVNO uses network resources. The congestion may be that excessive access user equipment (User Equipment, UE for short) of one or more MVNOs occupies excessive resources, but resource use of another MVNO is normal; or the congestion may be device congestion that occurs in network devices because UE of all MVNOs occupies excessive resources. How to perform corresponding congestion control for different MVNOs is a to-be-resolved problem.

An existing solution is: a radio access network (Radio access network, RAN for short) node reports cell congestion information to a core network device, where the congestion information may include an cell ID (cell ID) of a congested cell; after receiving the congestion information, the core network device performs uniform congestion control on the entire cell, for example, instructs a policy and charging rules function (Policy and Charging Rule Function, PCRF for short) entity or a service server to reduce sent data packets or reduce quality of service (QoS), so as to reduce resource occupation by UE in the congested cell. However, in the foregoing method, an MVNO that occupies a few resources or an MNO that provides a service may be restricted, resulting in that UE of the MVNO that occupies a few resources or of the MNO that provides a service cannot make full use of resources, and that congestion control efficiency is low. WO 2012/109951 A1 relates to method and system for controlling access to shared network. 3GPP draft publication TSG-SA WG1#30 S1-051115 titled, "Proposed new requirement for the provision of a MVNO Identifier" proposes use of mobile virtual network operator identifier to provide differentiated services to individual operators using a shared network.

### SUMMARY

Embodiments of the present invention provide a congestion control method, an apparatus, and a system, which can perform congestion control by distinguishing different involved operators, and implement precise and efficient congestion control on a specific congestion object for a specific congestion cause.

According to a first aspect, an embodiment of the present invention provides a congestion control method, including:
receiving, by a core network device, a congestion notification message sent when a radio access network RAN device detects that congestion occurs on one or more involved operators, where the congestion notification message includes an identifier of the involved operator on which congestion occurs, and the involved operator is a mobile virtual network operator MVNO or an operator that shares an operator network; and
performing, by the core network device according to the congestion notification message, congestion control on the involved operator corresponding to the identifier of the involved operator.

In a first possible implementation manner of the first aspect, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

With reference to the first possible implementation manner of the first aspect, in a second possible implementation manner of the first aspect, the core network device is a mobility management entity MME/serving GPRS support node SGSN, and the receiving, by a core network device, a congestion notification message sent when a radio access network RAN device detects that congestion occurs on one or more involved operators includes:
receiving, by the MME/SGSN, the congestion notification message sent when the RAN device detects that congestion occurs on the one or more involved operators; and
recording, by the MME/SGSN, the congestion notification message, and sending a congestion notification response message to the RAN device; and
the performing, by the core network device according to the congestion notification message, congestion control on the involved operator corresponding to the identifier of the involved operator includes:
   receiving, by the MME/SGSN, an access request sent by user equipment UE by using the RAN device, where the access request includes information about a to-be-accessed involved operator; and
   sending, by the MME/SGSN, an access reject message to the UE according to the information about the involved operator included in the access request and the congestion notification message.

With reference to the second possible implementation manner of the first aspect, in a third possible implementation manner of the first aspect, on a 4G network, the access request is an attach request; or
the access request is a service request initiated by the UE; or
the access request is a tracking area update request; or
the access request is a routing area update request; or
on a 2G/3G network, the access request is a primary/secondary PDP context setup or modify request initiated by the UE; and
the access reject message further includes: an access reject cause and idle cell indication information, where the idle cell indication information is used for the UE to choose to access an idle cell indicated by the idle cell indication information.

With reference to the first possible implementation manner of the first aspect, in a fourth possible implementation manner of the first aspect, the core network device includes an MME/SGSN, a serving gateway S-GW, a packet data network gateway P-GW/gateway GPRS support node GGSN, and a policy and charging rules function entity PCRF, and the receiving, by a core network device, a congestion notification message sent when a radio access network RAN device detects that congestion occurs on one or more involved operators includes:
receiving, by the MME/SGSN, the congestion notification message sent when the RAN device detects that congestion occurs on the one or more involved operators; and
recording, by the MME/SGSN, the congestion notification message, and sending a congestion notification response message to the RAN device; and
the performing, by the core network device according to the congestion notification message, congestion control on the involved operator corresponding to the identifier of the involved operator includes:
   sending, by the PCRF, an IP-connectivity access network IP-CAN session modify request to the P-GW/GGSN;
   initiating, by the P-GW/GGSN, a bearer setup/modify request to the MME/SGSN according to the IP-CAN session modify request by using the S-GW, where the bearer setup/modify request includes international mobile subscriber identity IMSI information of UE/an identifier of an involved operator to which UE belongs; and
   rejecting, by the MME/SGSN, the bearer setup/modify request according to the IMSI information/the identifier of the involved operator and the congestion notification message.

With reference to the first possible implementation manner of the first aspect, in a fifth possible implementation manner of the first aspect, the core network device includes an MME/SGSN, an S-GW, a P-GW/GGSN, and a PCRF, and the receiving, by a core network device, a congestion notification message sent when a radio access network RAN device detects that congestion occurs on one or more involved operators includes:
receiving, by the MME/SGSN, the congestion notification message sent when the RAN device detects that congestion occurs on the one or more involved operators;
sending, by the MME/SGSN, a bearer update request message to the P-GW/GGSN by using the S-GW, where the bearer update request message includes content of the congestion notification message;
receiving, by the P-GW/GGSN, the bearer update request message; and
recording, by the P-GW/GGSN, the bearer update request message, and sending a congestion notification response message to the RAN device by using the S-GW and the MME/SGSN; and
the performing, by the core network device according to the congestion notification message, congestion control on the involved operator corresponding to the identifier of the involved operator includes:
   sending, by the PCRF, an IP-connectivity access network IP-CAN session modify request to the P-GW/GGSN; and
   determining, by the P-GW/GGSN, according to a type of the congestion notification message and a type of the IP-CAN session modify request, to reject the IP-CAN session modify request.

With reference to the first possible implementation manner of the first aspect, in a sixth possible implementation manner of the first aspect, the core network device includes an S-GW, a P-GW/GGSN, and a PCRF, and the receiving, by a core network device, a congestion notification message sent when a radio access network RAN device detects that congestion occurs on one or more involved operators includes:
receiving, by the P-GW/GGSN by using the S-GW, the congestion notification message sent when the RAN device detects that congestion occurs on the one or more involved operators; and
recording, by the P-GW/GGSN, the congestion notification message, and sending a congestion notification response message to the RAN device by using the S-GW; and
the performing, by the core network device according to the congestion notification message, congestion control on the involved operator corresponding to the identifier of the involved operator includes:
   sending, by the PCRF, an IP-CAN session modify request to the P-GW/GGSN; and
   determining, by the P-GW/GGSN, according to a type of the congestion notification message and a type of the IP-CAN session modify request, to reject the IP-CAN session modify request.
According to a second aspect, an embodiment of the present invention provides a core network device, including:
   a receiving module, configured to receive a congestion notification message sent when a radio access network RAN device detects that congestion occurs on one or more involved operators, where the congestion notification message includes an identifier of the involved operator on which congestion occurs, and the involved operator is a mobile virtual network operator MVNO or an operator that shares an operator network; and
   a processing module, configured to perform, according to the congestion notification message, congestion control on the involved operator corresponding to the identifier of the involved operator.

In a first possible implementation manner of the second aspect, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

With reference to the first possible implementation manner of the second aspect, in a second possible implementation manner of the second aspect, the core network device is a mobility management entity MME/serving GPRS support node SGSN, and the MME/SGSN includes:
a first receiving module, configured to receive the congestion notification message sent when the RAN device detects that congestion occurs on the one or more involved operators;
a first sending module, configured to: record the congestion notification message, and send a congestion notification response message to the RAN device; where
the first receiving module is further configured to receive an access request sent by user equipment UE by using the RAN device, where the access request includes information about a to-be-accessed involved operator; and
a first processing module, configured to send an access reject message to the UE according to the information about the involved operator included in the access request and the congestion notification message.

With reference to the second possible implementation manner of the second aspect, in a third possible implementation manner of the second aspect, on a 4G network, the access request is an attach request; or
the access request is a service request initiated by the UE; or
the access request is a tracking area update request; or
the access request is a routing area update request; or
on a 2G/3G network, the access request is a primary/secondary PDP context setup or modify request initiated by the UE; and
the access reject message further includes: an access reject cause and idle cell indication information, where the idle cell indication information is used for the UE to choose to access an idle cell indicated by the idle cell indication information.

With reference to the first possible implementation manner of the second aspect, in a fourth possible implementation manner of the second aspect, the core network device includes an MME/SGSN, a serving gateway S-GW, a packet data network gateway P-GW/gateway GPRS support node GGSN, and a policy and charging rules function entity PCRF, and the MME/SGSN includes:
a second receiving module, configured to receive the congestion notification message sent when the RAN device detects that congestion occurs on the one or more involved operators; and
a second sending module, configured to: record the congestion notification message, and send a congestion notification response message to the RAN device;
the PCRF includes:
   a third sending module, configured to send an IP-connectivity access network IP-CAN session modify request to the P-GW/GGSN;
the P-GW/GGSN includes:
   a fourth sending module, configured to initiate a bearer setup/modify request to the MME/SGSN according to the IP-CAN session modify request by using the S-GW, where the bearer setup/modify request includes international mobile subscriber identity IMSI information of UE/an identifier of an involved operator to which UE belongs; and
the MME/SGSN further includes:
   a second processing module, configured to reject the bearer setup/modify request according to the IMSI information/the identifier of the involved operator and the congestion notification message.

With reference to the first possible implementation manner of the second aspect, in a fifth possible implementation manner of the second aspect, the core network device includes an MME/SGSN, an S-GW, a P-GW/GGSN, and a PCRF, and the MME/SGSN includes:
a third receiving module, configured to receive the congestion notification message sent when the RAN device detects that congestion occurs on the one or more involved operators; and
a fifth sending module, configured to send a bearer update request message to the P-GW/GGSN by using the S-GW, where the bearer update request message includes content of the congestion notification message;
the P-GW/GGSN includes:
   a fourth receiving module, configured to receive the bearer update request message; and
   a sixth sending module, configured to: record the bearer update request message, and send a congestion notification response message to the RAN device by using the S-GW and the MME/SGSN;
the PCRF includes:
   a seventh sending module, configured to send an IP-connectivity access network IP-CAN session modify request to the P-GW/GGSN; and
the P-GW/GGSN further includes:
   a third processing module, configured to determine, according to a type of the congestion notification message and a type of the IP-CAN session modify request, to reject the IP-CAN session modify request.

With reference to the first possible implementation manner of the second aspect, in a sixth possible implementation manner of the second aspect, the core network device includes an S-GW, a P-GW/GGSN, and a PCRF, and the P-GW/GGSN includes:
a fifth receiving module, configured to receive, by using the S-GW, the congestion notification message sent when the RAN device detects that congestion occurs on the one or more involved operators; and
a seventh sending module, configured to: record the congestion notification message, and send a congestion notification response message to the RAN device by using the S-GW;
the PCRF includes:
   an eighth sending module, configured to send an IP-CAN session modify request to the P-GW/GGSN; and
the P-GW/GGSN includes:
   a fourth processing module, configured to determine, according to a type of the congestion notification message and a type of the IP-CAN session modify request, to reject the IP-CAN session modify request.

According to a third aspect, an embodiment of the present invention provides a communications system according to the features of claim 15. According to the congestion control method, the apparatus, and the system that are provided in the embodiments of the present invention, a core network device receives a congestion notification message sent when a RAN device detects that congestion occurs on one or more involved operators, where the congestion notification message includes an identifier of the involved operator on which congestion occurs; and performs, according to the congestion notification message, congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a congestion control method according to the present invention;
FIG. 2 is a flowchart of Embodiment 2 of a congestion control method according to the present invention;
FIG. 3 is a signaling interworking diagram of Embodiment 3 of a congestion control method according to the present invention;
FIG. 4 is a signaling interworking diagram of Embodiment 4 of a congestion control method according to the present invention;
FIG. 5 is a signaling interworking diagram of Embodiment 5 of a congestion control method according to the present invention;
FIG. 6 is a signaling interworking diagram of Embodiment 6 of a congestion control method according to the present invention;
FIG. 7 is a schematic structural diagram of Embodiment 1 of a core network device according to the present invention;
FIG. 8 is a schematic structural diagram of Embodiment 1 of a RAN device according to the present invention;
FIG. 9 is a schematic structural diagram of Embodiment 2 of a core network device according to the present invention; and
FIG. 10 is a schematic structural diagram of Embodiment 2 of a RAN device according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

An embodiment of the present invention provides a congestion control method, which can implement that: in a scenario in which an operator subscribes to multiple virtual operators and congestion occurs in a radio access network (Radio access network, RAN for short) device, congestion situations of different MVNOs are relieved according to different congestion types, and a connection quantity resource and a bandwidth resource of an MVNO on which no congestion occurs are protected; in addition, precise control in a multi-MVNO status is also implemented.

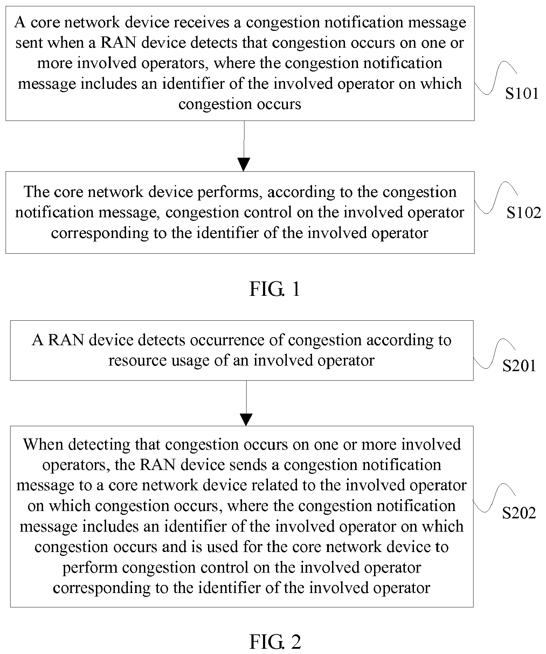

FIG. 1 is a flowchart of Embodiment 1 of a congestion control method according to the present invention. That this embodiment is executed by a core network device is used as an example for description. The core network device in this embodiment includes devices that support different access technologies on a 3GPP network, including: a mobility management device such as a serving GPRS support node (Serving GPRS Support Node, SGSN for short) that supports 2G/3G network access, a mobility management entity (Mobility Management Entity, MME for short) that supports 4G network access, or a 4G-SGSN, and a gateway device such as a gateway GPRS support node (Gateway GPRS Support Node, GGSN for short), a serving gateway (Serving Gateway, S-GW for short), or a packet data network gateway (Packet Data Network Gateway, P-GW for short).

As shown in FIG. 1, the method in this embodiment may include the following steps:
S101. The core network device receives a congestion notification message sent when a RAN device detects that congestion occurs on one or more involved operators, where the congestion notification message includes an identifier of the involved operator on which congestion occurs.

The involved operator is an operator that shares an operator network or an MVNO. For example, when the involved operator is an MVNO, the identifier of the involved operator may be an MVNO ID or an international mobile subscriber identity (International Mobile Subscriber Identity, IMSI for short) number segment corresponding to the MVNO.

S102. The core network device performs, according to the congestion notification message, congestion control on the involved operator corresponding to the identifier of the involved operator.

Further, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator. The congestion cause of the involved operator on which congestion occurs may be, for example, that a UE quantity resource, a connection quantity resource or a bandwidth resource available to the involved operator is insufficient; the resource usage, in the congested cell, of the involved operator on which congestion occurs may be, for example, type information such as a percentage or high/middle/low proportion, or a congestion degree of an access user equipment quantity resource, a bearer connection quantity resource, and/or a bandwidth resource occupied by the involved operator in the congested cell; the resource usage, in the another available cell of the RAN device or the adjacent RAN device of the RAN device, of the involved operator corresponding to the identifier of the involved operator may be, for example, a user equipment quantity resource, a connection quantity resource, or a bandwidth resource.

For different core network devices, there are four implementable manners in this embodiment. In a first implementable manner, the core network device is an MME/SGSN, and in this case, S101 is specifically as follows:
S101a. The MME/SGSN receives the congestion notification message sent when the RAN device detects that congestion occurs on the one or more involved operators, where the congestion notification message includes the identifier of the involved operator on which congestion occurs.
S101b. The MME/SGSN records the congestion notification message, and sends a congestion notification response message to the RAN device.
S102 is specifically as follows:
   S102a. The MME/SGSN receives an access request sent by user equipment UE by using the RAN device, where the access request includes information about a to-be-accessed involved operator.
   S102b. The MME/SGSN sends an access reject message to the UE according to the information about the involved operator included in the access request and the congestion notification message.

On a 4G network, the access request is an attach request; or the access request is a service request initiated by the UE; or the access request is a tracking area update request; or the access request is a routing area update request.

On a 2G/3G network, the access request is a primary/secondary Packet Data Protocol (Packet Data Protocol, PDP for short) context setup or modify request initiated by the UE.

The access reject message may further include: an access reject cause and idle cell indication information, where the idle cell indication information is used for the UE to choose to access an idle cell indicated by the idle cell indication information.

In a second implementable manner, the core network device includes an MME/SGSN, an S-GW, a P-GW/GGSN, and a policy and charging rules function entity (Policy and Charging Rules Function, PCRF for short), and in this case, S101 is specifically as follows:
S101c. The MME/SGSN receives the congestion notification message sent when the RAN device detects that congestion occurs on the one or more involved operators.
S101d. The MME/SGSN records the congestion notification message, and sends a congestion notification response message to the RAN device.
S102 is specifically as follows:
   S102c. The PCRF sends an IP-connectivity access network (IP Connectivity Access Network, IP-CAN for short) session modify request to the P-GW/GGSN.
   S102d. The P-GW/GGSN initiates a bearer setup/modify request to the MME/SGSN according to the IP-CAN session modify request by using the S-GW, where the bearer setup/modify request includes IMSI information of UE/an identifier of an involved operator to which UE belongs.
   S102e. The MME/SGSN rejects the bearer setup/modify request according to the IMSI information/the identifier of the involved operator and the congestion notification message.

Further, the method further includes:
initiating, by the MME/SGSN, a bearer setup/modify reject response to the P-GW/GGSN by using the S-GW, where the bearer setup/modify reject response includes a reject cause; and
sending, by the P-GW/GGSN, an IP-CAN session modify response message to the PCRF, where the IP-CAN session modify response message includes the reject cause.

In the foregoing two possible implementation manners, the method may further include:
receiving, by the MME/SGSN, a congestion relief notification message sent when the RAN device detects that a congestion situation of the involved operator on which congestion occurs in the RAN device is relieved; and
sending, by the MME/SGSN, a congestion relief response message to the RAN device.

In a third implementable manner, the core network device includes an MME/SGSN, an S-GW, a P-GW/GGSN, and a PCRF, and in this case, S101 is specifically as follows:
S101e. The MME/SGSN receives the congestion notification message sent when the RAN device detects that congestion occurs on the one or more involved operators.
S101f. The MME/SGSN sends a bearer update request message to the P-GW/GGSN by using the S-GW, where the bearer update request message includes content of the congestion notification message.
S101g. The P-GW/GGSN receives the bearer update request message.
S101h. The P-GW/GGSN records the bearer update request message, and sends a congestion notification response message to the RAN device by using the S-GW and the MME/SGSN.
S102 is specifically as follows:
   S102f. The PCRF sends an IP-connectivity access network IP-CAN session modify request to the P-GW/GGSN.
   S102g. The P-GW/GGSN determines, according to a type of the congestion notification message and a type of the IP-CAN session modify request, to reject the IP-CAN session modify request.

Further, the method further includes:
sending, by the P-GW/GGSN, an IP-CAN session modify response message to the PCRF, where the IP-CAN session modify response message includes a reject cause.

Further, the method further includes:
receiving, by the MME/SGSN, a congestion relief notification message sent when the RAN device detects that a congestion situation of the involved operator on which congestion occurs in the RAN device is relieved;
sending, by the MME/SGSN, the congestion relief notification message to the P-GW/GGSN by using the S-GW; and
sending, by the P-GW/GGSN, a congestion relief response message to the RAN device by using the S-GW and the MME/SGSN.

In a fourth implementable manner, the core network device includes an S-GW, a P-GW/GGSN, and a PCRF, and in this case, S101 is specifically as follows:
S101i. The P-GW/GGSN receives, by using the S-GW, the congestion notification message sent when the RAN device detects that congestion occurs on the one or more involved operators.
S101j. The P-GW/GGSN records the congestion notification message, and sends a congestion notification response message to the RAN device by using the S-GW.
S102 is specifically as follows:
   S102h. The PCRF sends an IP-CAN session modify request to the P-GW/GGSN.
   S102i. The P-GW/GGSN determines, according to a type of the congestion notification message and a type of the IP-CAN session modify request, to reject the IP-CAN session modify request.

Further, the method further includes:
sending, by the P-GW/GGSN, an IP-CAN session modify response message to the PCRF, where the IP-CAN session modify response message includes a reject cause.

Further, the method further includes:
receiving, by the P-GW/GGSN by using the S-GW, a congestion relief notification message sent when the RAN device detects that a congestion situation of the involved operator on which congestion occurs in the RAN device is relieved; and
sending, by the P-GW/GGSN, a congestion relief response message to the RAN device by using the S-GW.

According to the congestion control method provided in this embodiment of the present invention, a core network device receives a congestion notification message sent when a RAN device detects that congestion occurs on one or more involved operators, where the congestion notification message includes an identifier of the involved operator on which congestion occurs; and performs, according to the congestion notification message, congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

FIG. 2 is a flowchart of Embodiment 2 of a congestion control method according to the present invention. That this embodiment is executed by a RAN device is used as an example for description. As shown in FIG. 2, the method in this embodiment may include the following steps:
S201. The RAN device detects occurrence of congestion according to resource usage of an involved operator.

Specifically, if an operator shares its network with one or more operators or virtual operators, each virtual operator needs to negotiate with the operator for RAN resource usage. For example, a corresponding ratio of RAN resources is allocated to each virtual operator, and a congestion threshold for resource control is set. The RAN device collects statistics about resource usage of each MVNO in real time. When a quantity of used resources of a virtual operator in the RAN device continuously increases to reach or exceed a preset congestion threshold for the MVNO, it is determined that congestion occurs on the virtual operator in the RAN device. A cause for congestion may be that a user equipment quantity resource, in the RAN device, available to the MVNO is insufficient, or a connection quantity resource, in the RAN device, available to a user of the MVNO is insufficient, or a bandwidth resource, in the RAN device, available to the MVNO is insufficient. That the user equipment quantity resource is insufficient means that excessive user equipment of the virtual operator is connected to the RAN device, and a set threshold is reached or exceeded. That the available connection quantity resource is insufficient means that excessive bearers that belong to user equipment of the virtual operator are simultaneously connected to the RAN device, and a threshold set for the MVNO is reached or exceeded. That the bandwidth resource is insufficient means that occupied bandwidth (for example, a throughput) of all user equipment, of the MVNO, simultaneously connected to the RAN device reaches or exceeds a threshold set for the virtual operator.

S202. When detecting that congestion occurs on one or more involved operators, the RAN device sends a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator.

The congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator. The congestion cause of the involved operator on which congestion occurs may be, for example, that a UE quantity resource, a connection quantity resource or a bandwidth resource available to the involved operator is insufficient; the resource usage, in the congested cell, of the involved operator on which congestion occurs may be, for example, type information such as a percentage or high/middle/low proportion, or a congestion degree of an access user equipment quantity resource, a bearer connection quantity resource, and/or a bandwidth resource occupied by the involved operator in the congested cell; the resource usage, in the another available cell of the RAN device or the adjacent RAN device of the RAN device, of the involved operator corresponding to the identifier of the involved operator may be, for example, a user equipment quantity resource, a connection quantity resource, or a bandwidth resource.

For different core network devices, there are four implementable manners in this embodiment. In a first implementable manner, the core network device is an MME/SGSN, and in this case, S202 is specifically as follows:
S202a. When detecting that congestion occurs on the one or more involved operators, the RAN device sends the congestion notification message to the MME/SGSN related to the involved operator on which congestion occurs, so that the MME/SGSN records the congestion notification message, and performs, according to the congestion notification message, congestion control on the involved operator corresponding to the identifier of the involved operator.

In this case, the method further includes:
receiving, by the RAN device, a congestion notification response message sent by the MME/SGSN.

In a second implementable manner, the core network device includes an MME/SGSN, an S-GW, a P-GW/GGSN, and a PCRF, and in this case, S202 is specifically as follows:
S202b. When detecting that congestion occurs on the one or more involved operators, the RAN device sends the congestion notification message to the MME/SGSN related to the involved operator on which congestion occurs, so that the MME/SGSN records the congestion notification message.

In this case, the method further includes: receiving, by the RAN device, a congestion notification response message sent by the MME/SGSN.

In the foregoing two implementation manners, further, the method further includes:
sending, by the RAN device, a congestion relief notification message to the MME/SGSN when detecting that a congestion situation of the involved operator on which congestion occurs in the RAN device is relieved; and
receiving, by the RAN device, a congestion relief response message sent by the MME/SGSN.

In a third implementable manner, the core network device includes an MME/SGSN, an S-GW, a P-GW/GGSN, and a PCRF, and in this case, S202 is specifically as follows:
S202c. When detecting that congestion occurs on the one or more involved operators, the RAN device sends the congestion notification message to the MME/SGSN related to the involved operator on which congestion occurs, so that the MME/SGSN sends a bearer update request message to the P-GW/GGSN by using the S-GW, where the bearer update request message includes content of the congestion notification message.

In this case, the method further includes:
receiving, by the RAN device, a congestion notification response message sent by the P-GW/GGSN by using the S-GW and the MME/SGSN.

Further, the method further includes:
sending, by the RAN device, a congestion relief notification message to the MME/SGSN when detecting that a congestion situation of the involved operator on which congestion occurs in the RAN device is relieved, so that the MME/SGSN sends the congestion relief notification message to the P-GW/GGSN by using the S-GW; and
receiving, by the RAN device, a congestion relief response message sent by the P-GW/GGSN by using the S-GW and the MME/SGSN.

In a fourth implementable manner, the core network device includes an S-GW, a P-GW/GGSN, and a PCRF, and in this case, S202 is specifically as follows:
S202d. When detecting that congestion occurs on the one or more involved operators, the RAN device sends the congestion notification message to the S-GW related to the involved operator on which congestion occurs, so that the S-GW sends the congestion notification message to the P-GW/GGSN.

In this case, the method further includes:
receiving, by the RAN device, a congestion notification response message sent by the P-GW/GGSN by using the S-GW.

Further, the method further includes:
sending, by the RAN device, a congestion relief notification message to the S-GW when detecting that a congestion situation of the involved operator on which congestion occurs in the RAN device is relieved, so that the S-GW sends the congestion relief notification message to the P-GW/GGSN; and
receiving, by the RAN device, a congestion relief response message sent by the P-GW/GGSN by using the S-GW.

According to the congestion control method provided in this embodiment of the present invention, a RAN device detects occurrence of congestion according to resource usage of an involved operator; when detecting that congestion occurs on one or more involved operators, the RAN device sends a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

The following describes the technical solutions in the foregoing method embodiment in detail by using four specific embodiments.

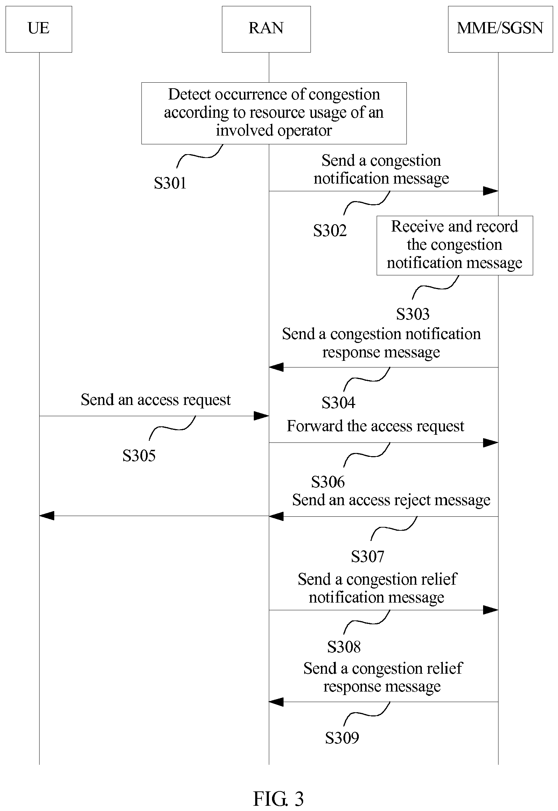

FIG. 3 is a signaling interworking diagram of Embodiment 3 of a congestion control method according to the present invention. As shown in FIG. 3, a core network device in this embodiment is an MME/SGSN, and the method in this embodiment may include the following steps:
S301. A RAN device detects occurrence of congestion according to resource usage of an involved operator.

Specifically, for example, the RAN device collects statistics about resource usage of each involved operator MVNO in real time; when a quantity of used resources of a virtual operator in the RAN device continuously increases to reach or exceed a preset congestion threshold for the MVNO, it is determined that congestion occurs on the virtual operator in the RAN device.

S302. When detecting that congestion occurs on one or more involved operators, the RAN device sends a congestion notification message to the MME/SGSN related to the involved operator on which congestion occurs, where the congestion notification message includes an identifier of the involved operator on which congestion occurs.

Specifically, for example, the RAN device selects a corresponding MME/SGSN according to an identifier (such as an MVNO ID, an IMSI number segment, or a public land mobile network (Public Land Mobile Network, PLMN for short) ID) of an MVNO on which congestion occurs, and sends the congestion notification message. The RAN device may also send the congestion notification message to all MMEs/SGSNs connected to the RAN device.

The congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

S303. The MME/SGSN receives the congestion notification message and records the congestion notification message.

S304. The MME/SGSN sends a congestion notification response message to the RAN device.

S305. UE sends an access request to the RAN device, where the access request includes information about a to-be-accessed involved operator.

S306. The RAN device forwards the received access request to the MME/SGSN.

S307. The MME/SGSN sends an access reject message to the UE according to the information about the involved operator included in the access request and the congestion notification message.

On a 4G network, the access request is an attach request; or the access request is a service request initiated by the UE; or the access request is a tracking area update request; or the access request is a routing area update request.

On a 2G/3G network, the access request is a primary/secondary Packet Data Protocol PDP context setup or modify request initiated by the UE.

For example, when a congestion cause included in the congestion notification message sent by the RAN device to the MME/SGSN is that a user equipment quantity resource exceeds a preset value, and the MME/SGSN determines, according to MVNO information included in an access request message, that the user equipment belongs to the virtual operator on which a congestion occurs, the MME/SGSN rejects the access request of the user equipment according to the foregoing information.

In a 4G network scenario, the user equipment needs to establish a default bearer in an attach process. Therefore, in the 4G scenario, when a congestion type included in the congestion notification message sent by the RAN device to the MME is congestion caused by that a connection quantity resource exceeds a preset value, and the MME determines, according to the MVNO information included in the access request message, that the user equipment belongs to the virtual operator on which a congestion occurs and that an access type of a user is attaching, the MME rejects the attach request of the user equipment.

Further, the access reject message may further include: an access reject cause and idle cell indication information, where the idle cell indication information is used for the UE to choose to access an idle cell indicated by the idle cell indication information. For example, the access reject cause is that congestion occurs on the virtual operator in the RAN device because the user equipment quantity resource or the connection quantity resource exceeds a limit, and another available cell may further be indicated to the user equipment, so as to instruct the user equipment to access the idle cell. To instruct the user equipment to access the idle cell, information about the idle cell may be sent to the user equipment by using a non-access stratum (NAS) message, and the user equipment selects an appropriate cell for access. In a 4G network scenario, the information about the idle cell may be sent to the RAN device by using a system message (SI) access point (AP) message header, and the RAN device instructs the user equipment to select an appropriate cell for access. In a 3G network scenario, the information about the idle cell may be sent to the RAN device by using a RAN AP message header, and the RAN device instructs the user equipment to select an appropriate cell for access. In a 2G network scenario, the information about the idle cell may be sent to the RAN device by using a base station subsystem (BSS) AP message header, and the RAN device instructs the user equipment to select an appropriate cell for access.

S308. When detecting that a congestion situation of the involved operator on which congestion occurs in the RAN device is relieved, the RAN device sends a congestion relief notification message to the MME/SGSN.

For example, when resources (a connection quantity resource/a bandwidth resource) occupied by the MVNO on which congestion occurs in the RAN device gradually decrease to reach or to be lower than a preset congestion relief threshold for the MVNO, the RAN device determines that a congestion situation of the MVNO is relieved. The RAN device may send the congestion relief notification message to all MMEs/SGSNs connected to the RAN device; or may send the congestion relief notification message to only an MME/SGSN related to the MVNO on which congestion occurs. For example, the RAN device selects a corresponding MME/SGSN according to an identifier (such as an MVNO ID, an IMSI number segment, or a PLMN ID) of the MVNO on which congestion occurs, and sends the congestion relief notification message.

S309. The MME/SGSN sends a congestion relief response message to the RAN device.

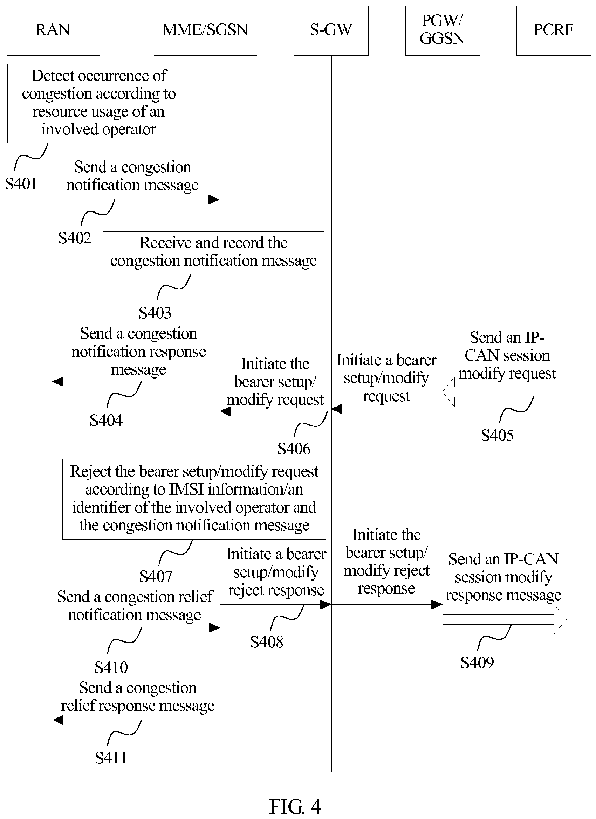

FIG. 4 is a signaling interworking diagram of Embodiment 4 of a congestion control method according to the present invention. A core network device in this embodiment includes an MME/SGSN, an S-GW, a P-GW/GGSN, and a PCRF, and as shown in FIG. 4, the method in this embodiment may include the following steps:
S401 to S404 in this embodiment are the same as steps S301 to S304 in Embodiment 3 shown in FIG. 3, and details are not described herein again.

S405. The PCRF sends an IP-CAN session modify request to the P-GW/GGSN.

S406. The P-GW/GGSN initiates a bearer setup/modify request to the MME/SGSN according to the IP-CAN session modify request by using the S-GW, where the bearer setup/modify request includes IMSI information of UE/an identifier of an involved operator to which UE belongs.

S407. The MME/SGSN rejects the bearer setup/modify request according to the IMSI information/the identifier of the involved operator and the congestion notification message.

Specifically, for example, when a congestion cause included in the congestion notification message sent by the RAN device to the MME/SGSN is that a connection quantity resource and/or a bandwidth resource exceeds a preset value, and the MME/SGSN determines, according to the IMSI information/the identifier of the involved operator, that the UE belongs to the involved operator on which congestion occurs, the following actions are executed according to different situations:
when the congestion cause is that the connection quantity resource is insufficient, and a type of a request message received by the MME/SGSN is a bearer setup request, the MME/SGSN rejects the bearer setup request; or
when the congestion cause is that the bandwidth resource is insufficient, a type of a request message received by the MME/SGSN is a bearer update request, and updating a bearer needs to increase bearer bandwidth, or a type of a request message received by the MME/SGSN is a new-bearer setup request, the MME/SGSN rejects the bearer update request.

S408. The MME/SGSN initiates a bearer setup/modify reject response to the P-GW/GGSN by using the S-GW, where the bearer setup/modify reject response includes a reject cause.

S409. The P-GW/GGSN sends an IP-CAN session modify response message to the PCRF, where the IP-CAN session modify response message includes the reject cause.

Specifically, the MME/SGSN initiates, by using the S-GW, the bearer setup/modify reject response to the P-GW/GGSN according to a policy made in the foregoing procedure. For example, the response may include a reject cause that congestion occurs on an MVNO, where a congestion type is that a connection quantity resource and/or a bandwidth resource exceeds a preset value. The P-GW/GGSN sends the IP-CAN session modify response message to the PCRF, where the message may include the reject cause that the congestion occurs on the MVNO, where the congestion type is that the connection quantity resource and/or the bandwidth resource exceeds a preset value.

S410. When detecting that a congestion situation of the involved operator on which congestion occurs in the RAN device is relieved, the RAN device sends a congestion relief notification message to the MME/SGSN.

For example, when resources (a connection quantity resource/a bandwidth resource) occupied by the MVNO on which congestion occurs in the RAN device gradually decrease to reach or to be lower than a preset congestion relief threshold for the MVNO, the RAN device determines that a congestion situation of the MVNO is relieved. The RAN device may send the congestion relief notification message to all MMEs/SGSNs connected to the RAN device; or may send the congestion relief notification message to only an MME/SGSN related to the MVNO on which congestion occurs. For example, the RAN device selects a corresponding MME/SGSN according to an identifier (such as an MVNO ID, an IMSI number segment, or a PLMN ID) of the MVNO on which congestion occurs, and sends the congestion relief notification message.

S411. The MME/SGSN sends a congestion relief response message to the RAN device.

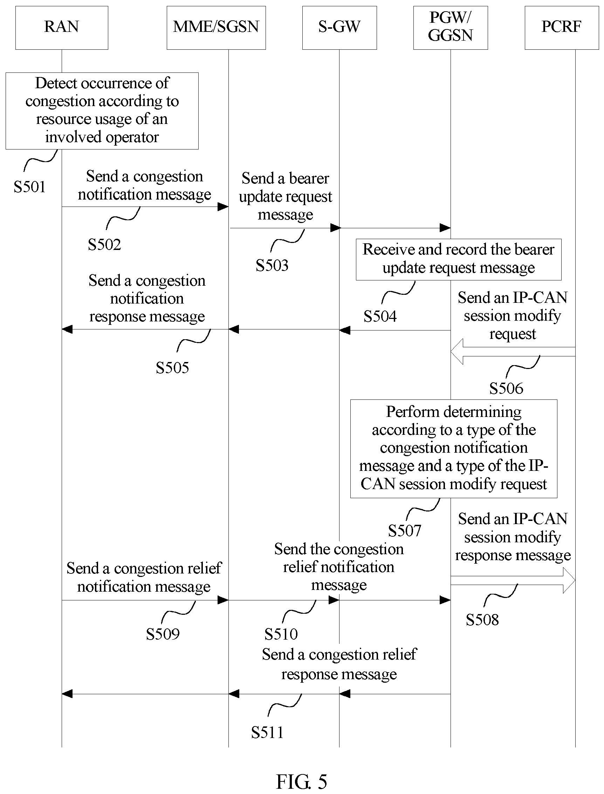

FIG. 5 is a signaling interworking diagram of Embodiment 5 of a congestion control method according to the present invention. A core network device in this embodiment includes an MME/SGSN, an S-GW, a P-GW/GGSN, and a PCRF, and as shown in FIG. 5, the method in this embodiment may include the following steps:
S501. A RAN device detects occurrence of congestion according to resource usage of an involved operator.

Specifically, for example, the RAN device collects statistics about resource usage of each involved operator MVNO in real time; when a quantity of used resources of a virtual operator in the RAN device continuously increases to reach or exceed a preset congestion threshold for the MVNO, it is determined that congestion occurs on the virtual operator in the RAN device.

S502. When detecting that congestion occurs on one or more involved operators, the RAN device sends a congestion notification message to the MME/SGSN related to the involved operator on which congestion occurs, where the congestion notification message includes an identifier of the involved operator on which congestion occurs.

Specifically, for example, the RAN device selects a corresponding MME/SGSN according to an identifier (such as an MVNO ID, an IMSI number segment, or a PLMN ID) of an MVNO on which congestion occurs, and sends the congestion notification message. The RAN device may also send the congestion notification message to all MMEs/SGSNs connected to the RAN device.

The congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

S503. The MME/SGSN sends a bearer update request message to the P-GW/GGSN by using the S-GW, where the bearer update request message includes content of the congestion notification message.

S504. The P-GW/GGSN receives and records the bearer update request message.

S505. The P-GW/GGSN sends a congestion notification response message to the RAN device by using the S-GW and the MME/SGSN.

S506. The PCRF sends an IP-CAN session modify request to the P-GW/GGSN.

S507. The P-GW/GGSN determines, according to a type of the congestion notification message and a type of the IP-CAN session modify request, to reject the IP-CAN session modify request.

S508. The P-GW/GGSN sends an IP-CAN session modify response message to the PCRF, where the IP-CAN session modify response message includes a reject cause.

S509. When detecting that a congestion situation of the involved operator on which congestion occurs in the RAN device is relieved, the RAN device sends a congestion relief notification message to the MME/SGSN.

For example, when resources (a connection quantity resource/a bandwidth resource) occupied by the MVNO on which congestion occurs in the RAN device gradually decrease to reach or to be lower than a preset congestion relief threshold for the MVNO, the RAN device determines that a congestion situation of the MVNO is relieved. The RAN device may send the congestion relief notification message to all MMEs/SGSNs connected to the RAN device; or may send the congestion relief notification message to only an MME/SGSN related to the MVNO on which congestion occurs. For example, the RAN device selects a corresponding MME/SGSN according to an identifier (such as an MVNO ID, an IMSI number segment, or a PLMN ID) of the MVNO on which congestion occurs, and sends the congestion relief notification message.

S510. The MME/SGSN sends the congestion relief notification message to the P-GW/GGSN by using the S-GW.

S511. The P-GW/GGSN sends a congestion relief response message to the RAN device by using the S-GW and the MME/SGSN.

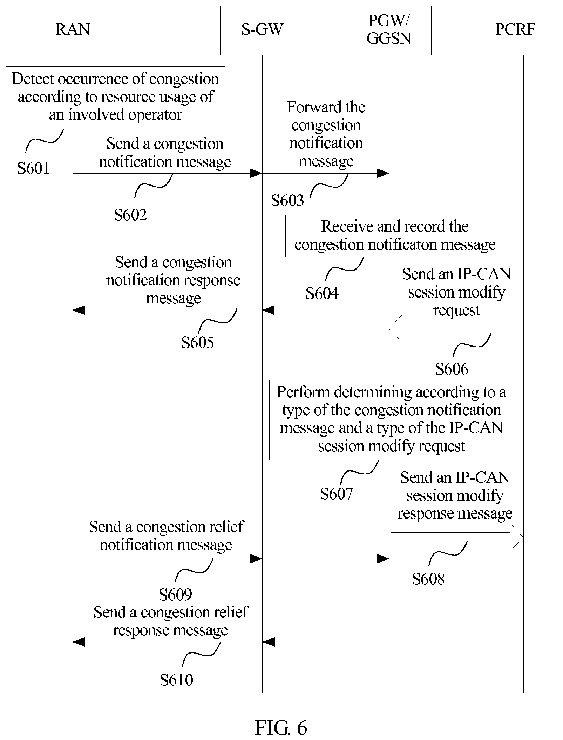

FIG. 6 is a signaling interworking diagram of Embodiment 6 of a congestion control method according to the present invention. A core network device in this embodiment includes an S-GW, a P-GW/GGSN, and a PCRF, and as shown in FIG. 6, the method in this embodiment may include the following steps:
S601. A RAN device detects occurrence of congestion according to resource usage of an involved operator.

Specifically, for example, the RAN device collects statistics about resource usage of each involved operator MVNO in real time; when a quantity of used resources of a virtual operator in the RAN device continuously increases to reach or exceed a preset congestion threshold for the MVNO, it is determined that congestion occurs on the virtual operator in the RAN device.

S602. When detecting that congestion occurs on one or more involved operators, the RAN device sends a congestion notification message to the S-GW related to the involved operator on which congestion occurs, where the congestion notification message includes an identifier of the involved operator on which congestion occurs.

Specifically, for example, the RAN device selects a corresponding MME/SGSN according to an identifier (such as an MVNO ID, an IMSI number segment, or a PLMN ID) of an MVNO on which congestion occurs, and sends the congestion notification message. The RAN device may also send the congestion notification message to all MMEs/SGSNs connected to the RAN device.

The congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

S603. The S-GW forwards the congestion notification message to the P-GW/GGSN.

S604. The P-GW/GGSN receives and records the congestion notification message.

S605. The P-GW/GGSN sends a congestion notification response message to the RAN device by using the S-GW.

S606. The PCRF sends an IP-CAN session modify request to the P-GW/GGSN.

S607. The P-GW/GGSN determines, according to a type of the congestion notification message and a type of the IP-CAN session modify request, to reject the IP-CAN session modify request.

S608. The P-GW/GGSN sends an IP-CAN session modify response message to the PCRF, where the IP-CAN session modify response message includes a reject cause.

S609. When detecting that a congestion situation of the involved operator on which congestion occurs in the RAN device is relieved, the RAN device sends a congestion relief notification message to the P-GW/GGSN by using the S-GW.

S610. The P-GW/GGSN sends a congestion relief response message to the RAN device by using the S-GW.

The congestion relief notification message includes at least one of the following information: (1) an identifier of an MVNO whose congestion situation is relieved (for example, the identifier may be a parameter used to identify one or more MVNOs on which congestion occurs, or may be an MVNO ID (MVNO ID) or an IMSI number segment corresponding to the MVNO); (2) a congestion cause of an MVNO whose congestion situation is relieved.

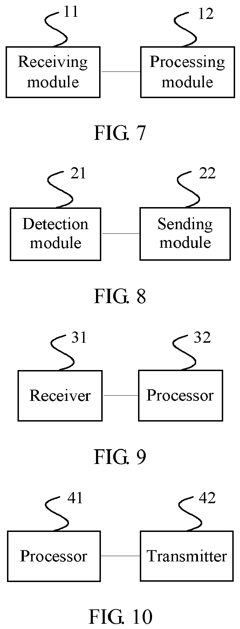

FIG. 7 is a schematic structural diagram of Embodiment 1 of a core network device according to the present invention. As shown in FIG. 7, the apparatus in this embodiment may include: a receiving module 11 and a processing module 12. The receiving module 11 is configured to receive a congestion notification message sent when a RAN device detects that congestion occurs on one or more involved operators, where the congestion notification message includes an identifier of the involved operator on which congestion occurs. The processing module 12 is configured to perform, according to the congestion notification message, congestion control on the involved operator corresponding to the identifier of the involved operator.

Further, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

For different core network devices, there are four implementable manners in this embodiment. In a first implementable manner, when the core network device is an MME/SGSN, the MME/SGSN includes: a first receiving module, a first sending module, and a first processing module. The first receiving module is configured to receive the congestion notification message sent when the RAN device detects that congestion occurs on the one or more involved operators. The first sending module is configured to: record the congestion notification message, and send a congestion notification response message to the RAN device. The first receiving module is further configured to receive an access request sent by user equipment UE by using the RAN device, where the access request includes information about a to-be-accessed involved operator. The first processing module is configured to send an access reject message to the UE according to the information about the involved operator included in the access request and the congestion notification message.

On a 4G network, the access request is an attach request; or the access request is a service request initiated by the UE; or the access request is a tracking area update request; or the access request is a routing area update request.

On a 2G/3G network, the access request is a primary/secondary PDP context setup or modify request initiated by the UE.

The access reject message further includes: an access reject cause and idle cell indication information, where the idle cell indication information is used for the UE to choose to access an idle cell indicated by the idle cell indication information.

In a second possible implementation manner, when the core network device includes an MME/SGSN, an S-GW, a P-GW/GGSN, and a PCRF, the MME/SGSN includes: a second receiving module and a second sending module. The second receiving module is configured to receive the congestion notification message sent when the RAN device detects that congestion occurs on the one or more involved operators. The second sending module is configured to: record the congestion notification message, and send a congestion notification response message to the RAN device.

The PCRF includes a third sending module, where the third sending module is configured to send an IP-connectivity access network IP-CAN session modify request to the P-GW/GGSN.

The P-GW/GGSN includes a fourth sending module, where the fourth sending module is configured to initiate a bearer setup/modify request to the MME/SGSN according to the IP-CAN session modify request by using the S-GW, where the bearer setup/modify request includes international mobile subscriber identity IMSI information of UE/an identifier of an involved operator to which UE belongs.

The MME/SGSN further includes a second processing module, where the second processing module is configured to reject the bearer setup/modify request according to the IMSI information/the identifier of the involved operator and the congestion notification message.

Further, the second sending module is further configured to initiate a bearer setup/modify reject response to the P-GW/GGSN by using the S-GW, where the bearer setup/modify reject response includes a reject cause.

The fourth sending module is further configured to send an IP-CAN session modify response message to the PCRF, where the IP-CAN session modify response message includes the reject cause.

In the foregoing two implementation manners, further, the second receiving module is further configured to receive a congestion relief notification message sent when the RAN device detects that a congestion situation of the involved operator on which congestion occurs in the RAN device is relieved, and the second sending module is further configured to send a congestion relief response message to the RAN device.

In a third possible implementation manner, when the core network device includes an MME/SGSN, an S-GW, a P-GW/GGSN, and a PCRF, the MME/SGSN includes: a third receiving module and a fifth sending module. The third receiving module is configured to receive the congestion notification message sent when the RAN device detects that congestion occurs on the one or more involved operators. The fifth sending module is configured to send a bearer update request message to the P-GW/GGSN by using the S-GW, where the bearer update request message includes content of the congestion notification message.

The P-GW/GGSN includes: a fourth receiving module and a sixth sending module, where the fourth receiving module is configured to receive the bearer update request message; and the sixth sending module is configured to: record the bearer update request message, and send a congestion notification response message to the RAN device by using the S-GW and the MME/SGSN.

The PCRF includes a seventh sending module, where the seventh sending module is configured to send an IP-connectivity access network IP-CAN session modify request to the P-GW/GGSN.

The P-GW/GGSN further includes a third processing module, where the third processing module is configured to determine, according to a type of the congestion notification message and a type of the IP-CAN session modify request, to reject the IP-CAN session modify request.

Further, the sixth sending module is further configured to send an IP-CAN session modify response message to the PCRF, where the IP-CAN session modify response message includes a reject cause.

Further, the third receiving module is further configured to receive a congestion relief notification message sent when the RAN device detects that a congestion situation of the involved operator on which congestion occurs in the RAN device is relieved.

The fifth sending module is further configured to send the congestion relief notification message to the P-GW/GGSN by using the S-GW.

The sixth sending module is further configured to send a congestion relief response message to the RAN device by using the S-GW and the MME/SGSN.

In a fourth possible implementation manner, when the core network device includes an S-GW, a P-GW/GGSN, and a PCRF, the P-GW/GGSN includes: a fifth receiving module and a seventh sending module. The fifth receiving module is configured to receive, by using the S-GW, the congestion notification message sent when the RAN device detects that congestion occurs on the one or more involved operators. The seventh sending module is configured to: record the congestion notification message, and send a congestion notification response message to the RAN device by using the S-GW.

The PCRF includes an eighth sending module, where the eighth sending module is configured to send an IP-CAN session modify request to the P-GW/GGSN.

The P-GW/GGSN includes a fourth processing module, where the fourth processing module is configured to determine, according to a type of the congestion notification message and a type of the IP-CAN session modify request, to reject the IP-CAN session modify request.

Further, the seventh sending module is further configured to send an IP-CAN session modify response message to the PCRF, where the IP-CAN session modify response message includes a reject cause.

Further, the fifth receiving module is further configured to receive, by using the S-GW, a congestion relief notification message sent when the RAN device detects that a congestion situation of the involved operator on which congestion occurs in the RAN device is relieved, and the seventh sending module is further configured to send a congestion relief response message to the RAN device by using the S-GW.

The apparatus in this embodiment may be configured to execute the technical solution in the method embodiment shown in FIG. 1. Implementation principles thereof are similar, and details are not described herein again.

According to the core network device provided in this embodiment of the present invention, a receiving module receives a congestion notification message sent when a RAN device detects that congestion occurs on one or more involved operators, where the congestion notification message includes an identifier of the involved operator on which congestion occurs; then a processing module performs, according to the congestion notification message, congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

FIG. 8 is a schematic structural diagram of Embodiment 1 of a RAN device according to the present invention. As shown in FIG. 8, the apparatus in this embodiment may include: a detection module 21 and a sending module 22. The detection module 21 is configured to detect occurrence of congestion according to resource usage of an involved operator. The sending module 22 is configured to: when the detection module 21 detects that congestion occurs on one or more involved operators, send a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator.

Further, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

For different core network devices, there are four implementable manners in this embodiment. In a first implementable manner, when the core network device is an MME/SGSN, the sending module 22 is configured to:
when the detection module 21 detects that congestion occurs on the one or more involved operators, send the congestion notification message to the MME/SGSN related to the involved operator on which congestion occurs, so that the MME/SGSN records the congestion notification message, and performs, according to the congestion notification message, congestion control on the involved operator corresponding to the identifier of the involved operator.

The RAN device further includes a first receiving module, where the first receiving module is configured to receive a congestion notification response message sent by the MME/SGSN.

In a second implementable manner, when the core network device includes an MME/SGSN, an S-GW, a P-GW/GGSN, and a PCRF, the sending module 22 is configured to:
when the detection module 21 detects that congestion occurs on the one or more involved operators, send the congestion notification message to the MME/SGSN related to the involved operator on which congestion occurs, so that the MME/SGSN records the congestion notification message.

The RAN device further includes a second receiving module, where the second receiving module is configured to receive a congestion notification response message sent by the MME/SGSN.

In the foregoing two implementation manners, the sending module 22 is further configured to:
send a congestion relief notification message to the MME/SGSN when the detection module 21 detects that a congestion situation of the involved operator on which congestion occurs in the RAN device is relieved; and
the first receiving module or the second receiving module is further configured to receive a congestion relief response message sent by the MME/SGSN.

In a third implementable manner, when the core network device includes an MME/SGSN, an S-GW, a P-GW/GGSN, and a PCRF, the sending module 22 is configured to:
when the detection module 21 detects that congestion occurs on the one or more involved operators, send the congestion notification message to the MME/SGSN related to the involved operator on which congestion occurs, so that the MME/SGSN sends a bearer update request message to the P-GW/GGSN by using the S-GW, where the bearer update request message includes content of the congestion notification message.

The RAN device further includes a third receiving module, where the third receiving module is configured to receive a congestion notification response message sent by the P-GW/GGSN by using the S-GW and the MME/SGSN.

Further, the sending module 22 is further configured to:
send a congestion relief notification message to the MME/SGSN when the detection module 21 detects that a congestion situation of the involved operator on which congestion occurs in the RAN device is relieved, so that the MME/SGSN sends the congestion relief notification message to the P-GW/GGSN by using the S-GW; and
the third receiving module is further configured to receive a congestion relief response message sent by the P-GW/GGSN by using the S-GW and the MME/SGSN.

In a fourth implementable manner, when the core network device includes an S-GW, a P-GW/GGSN, and a PCRF, the sending module 22 is configured to:
when the detection module 21 detects that congestion occurs on the one or more involved operators, send the congestion notification message to the S-GW related to the involved operator on which congestion occurs, so that the S-GW sends the congestion notification message to the P-GW/GGSN.

The RAN device further includes:
a fourth receiving module, configured to receive a congestion notification response message sent by the P-GW/GGSN by using the S-GW.

Further, the sending module 22 is further configured to:
send a congestion relief notification message to the S-GW when the detection module 21 detects that a congestion situation of the involved operator on which congestion occurs in the RAN device is relieved, so that the S-GW sends the congestion relief notification message to the P-GW/GGSN; and
the fourth receiving module is further configured to receive a congestion relief response message sent by the P-GW/GGSN by using the S-GW.

The apparatus in this embodiment may be configured to execute the technical solution in the method embodiment shown in FIG. 2. Implementation principles and technical effects thereof are similar, and details are not described herein again.

According to the RAN device provided in this embodiment of the present invention, a detection module detects occurrence of congestion according to resource usage of an involved operator; when the RAN device detects that congestion occurs on one or more involved operators, a sending module sends a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

A communications system provided in an embodiment of the present invention includes the core network device shown in FIG. 7 and the RAN device shown in FIG. 8.

FIG. 9 is a schematic structural diagram of Embodiment 2 of a core network device according to the present invention. As shown in FIG. 9, the apparatus in this embodiment may include: a receiver 31 and a processor 32. The receiver 31 is configured to receive a congestion notification message sent when a RAN device detects that congestion occurs on one or more involved operators, where the congestion notification message includes an identifier of the involved operator on which congestion occurs. The processor 32 is configured to perform, according to the congestion notification message, congestion control on the involved operator corresponding to the identifier of the involved operator.

Further, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

For different core network devices, there are four implementable manners in this embodiment. In a first implementable manner, when the core network device is an MME/SGSN, the MME/SGSN includes: a first receiver, a first transmitter, and a first processor. The first receiver is configured to receive the congestion notification message sent when the RAN device detects that congestion occurs on the one or more involved operators. The first transmitter is configured to: record the congestion notification message, and send a congestion notification response message to the RAN device. The first receiver is further configured to receive an access request sent by user equipment UE by using the RAN device, where the access request includes information about a to-be-accessed involved operator. The first processor is configured to send an access reject message to the UE according to the information about the involved operator included in the access request and the congestion notification message.

On a 4G network, the access request is an attach request; or the access request is a service request initiated by the UE; or the access request is a tracking area update request; or the access request is a routing area update request.

On a 2G/3G network, the access request is a primary/secondary PDP context setup or modify request initiated by the UE.

The access reject message further includes: an access reject cause and idle cell indication information, where the idle cell indication information is used for the UE to choose to access an idle cell indicated by the idle cell indication information.

In a second possible implementation manner, when the core network device includes an MME/SGSN, an S-GW, a P-GW/GGSN, and a PCRF, the MME/SGSN includes: a second receiver and a second transmitter. The second receiver is configured to receive the congestion notification message sent when the RAN device detects that congestion occurs on the one or more involved operators. The second transmitter is configured to: record the congestion notification message, and send a congestion notification response message to the RAN device.

The PCRF includes a third transmitter, where the third transmitter is configured to send an IP-connectivity access network IP-CAN session modify request to the P-GW/GGSN.

The P-GW/GGSN includes a fourth transmitter, where the fourth transmitter is configured to initiate a bearer setup/modify request to the MME/SGSN according to the IP-CAN session modify request by using the S-GW, where the bearer setup/modify request includes international mobile subscriber identity IMSI information of UE/an identifier of an involved operator to which UE belongs.

The MME/SGSN further includes a second processor, where the second processor is configured to reject the bearer setup/modify request according to the IMSI information/the identifier of the involved operator and the congestion notification message.

Further, the second transmitter is further configured to initiate a bearer setup/modify reject response to the P-GW/GGSN by using the S-GW, where the bearer setup/modify reject response includes a reject cause.

The fourth transmitter is further configured to send an IP-CAN session modify response message to the PCRF, where the IP-CAN session modify response message includes the reject cause.

In the foregoing two implementation manners, further, the second receiver is further configured to receive a congestion relief notification message sent when the RAN device detects that a congestion situation of the involved operator on which congestion occurs in the RAN device is relieved, and the second transmitter is further configured to send a congestion relief response message to the RAN device.

In a third possible implementation manner, when the core network device includes an MME/SGSN, an S-GW, a P-GW/GGSN, and a PCRF, the MME/SGSN includes: a third receiver and a fifth transmitter, the third receiver is configured to receive the congestion notification message sent when the RAN device detects that congestion occurs on the one or more involved operators. The fifth transmitter is configured to send a bearer update request message to the P-GW/GGSN by using the S-GW, where the bearer update request message includes content of the congestion notification message.

The P-GW/GGSN includes: a fourth receiver and a sixth transmitter, where the fourth receiver is configured to receive the bearer update request message; and the sixth transmitter is configured to: record the bearer update request message, and send a congestion notification response message to the RAN device by using the S-GW and the MME/SGSN.

The PCRF includes a seventh transmitter, where the seventh transmitter is configured to send an IP-connectivity access network IP-CAN session modify request to the P-GW/GGSN.

The P-GW/GGSN further includes a third processor, where the third processor is configured to determine, according to a type of the congestion notification message and a type of the IP-CAN session modify request, to reject the IP-CAN session modify request.

Further, the sixth transmitter is further configured to send an IP-CAN session modify response message to the PCRF, where the IP-CAN session modify response message includes a reject cause.

Further, the third receiver is further configured to receive a congestion relief notification message sent when the RAN device detects that a congestion situation of the involved operator on which congestion occurs in the RAN device is relieved.

The fifth transmitter is further configured to send the congestion relief notification message to the P-GW/GGSN by using the S-GW.

The sixth transmitter is further configured to send a congestion relief response message to the RAN device by using the S-GW and the MME/SGSN.

In a fourth possible implementation manner, when the core network device includes an S-GW, a P-GW/GGSN, and a PCRF, the P-GW/GGSN includes: a fifth receiver and a seventh transmitter. The fifth receiver is configured to receive, by using the S-GW, the congestion notification message sent when the RAN device detects that congestion occurs on the one or more involved operators. The seventh transmitter is configured to: record the congestion notification message, and send a congestion notification response message to the RAN device by using the S-GW.

The PCRF includes an eighth transmitter, where the eighth transmitter is configured to send an IP-CAN session modify request to the P-GW/GGSN.

The P-GW/GGSN includes a fourth processor, where the fourth processor is configured to determine, according to a type of the congestion notification message and a type of the IP-CAN session modify request, to reject the IP-CAN session modify request.

Further, the seventh transmitter is further configured to send an IP-CAN session modify response message to the PCRF, where the IP-CAN session modify response message includes a reject cause.

Further, the fifth receiver is further configured to receive, by using the S-GW, a congestion relief notification message sent when the RAN device detects that a congestion situation of the involved operator on which congestion occurs in the RAN device is relieved; and the seventh transmitter is further configured to send a congestion relief response message to the RAN device by using the S-GW.

The apparatus in this embodiment may be configured to execute the technical solution in the method embodiment shown in FIG. 1. Implementation principles thereof are similar, and details are not described herein again.

According to the core network device provided in this embodiment of the present invention, a receiver receives a congestion notification message sent when a RAN device detects that congestion occurs on one or more involved operators, where the congestion notification message includes an identifier of the involved operator on which congestion occurs; then a processor performs, according to the congestion notification message, congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

FIG. 10 is a schematic structural diagram of Embodiment 2 of a RAN device according to the present invention. As shown in FIG. 10, the apparatus in this embodiment may include: a processor 41 and a transmitter 42. The processor 41 is configured to detect occurrence of congestion according to resource usage of an involved operator. The transmitter 42 is configured to: when the processor 41 detects that congestion occurs on one or more involved operators, send a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator.

Further, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

For different core network devices, there are four implementable manners in this embodiment. In a first implementable manner, when the core network device is an MME/SGSN, the transmitter 42 is configured to:
when the processor 41 detects that congestion occurs on the one or more involved operators, send the congestion notification message to the MME/SGSN related to the involved operator on which congestion occurs, so that the MME/SGSN records the congestion notification message, and performs, according to the congestion notification message, congestion control on the involved operator corresponding to the identifier of the involved operator.

The RAN device further includes a first receiver, where the first receiver is configured to receive a congestion notification response message sent by the MME/SGSN.

In a second implementable manner, when the core network device includes an MME/SGSN, an S-GW, a P-GW/GGSN, and a PCRF, the transmitter 42 is configured to:
when the processor 41 detects that congestion occurs on the one or more involved operators, send the congestion notification message to the MME/SGSN related to the involved operator on which congestion occurs, so that the MME/SGSN records the congestion notification message.

The RAN device further includes a second receiver, where the second receiver is configured to receive a congestion notification response message sent by the MME/SGSN.

In the foregoing two implementation manners, the transmitter 42 is further configured to:
send a congestion relief notification message to the MME/SGSN when the processor 41 detects that a congestion situation of the involved operator on which congestion occurs in the RAN device is relieved; and
the first receiver or the second receiver is further configured to receive a congestion relief response message sent by the MME/SGSN.

In a third implementable manner, when the core network device includes an MME/SGSN, an S-GW, a P-GW/GGSN, and a PCRF, the transmitter 42 is configured to:
when the processor 41 detects that congestion occurs on the one or more involved operators, send the congestion notification message to the MME/SGSN related to the involved operator on which congestion occurs, so that the MME/SGSN sends a bearer update request message to the P-GW/GGSN by using the S-GW, where the bearer update request message includes content of the congestion notification message.

The RAN device further includes a third receiver, where the third receiver is configured to receive a congestion notification response message sent by the P-GW/GGSN by using the S-GW and the MME/SGSN.

Further, the transmitter 42 is further configured to:
send a congestion relief notification message to the MME/SGSN when the processor 41 detects that a congestion situation of the involved operator on which congestion occurs in the RAN device is relieved, so that the MME/SGSN sends the congestion relief notification message to the P-GW/GGSN by using the S-GW; and
the third receiver is further configured to receive a congestion relief response message sent by the P-GW/GGSN by using the S-GW and the MME/SGSN.

In a fourth implementable manner, when the core network device includes an S-GW, a P-GW/GGSN, and a PCRF, the transmitter 42 is configured to:
when the processor 41 detects that congestion occurs on the one or more involved operators, send the congestion notification message to the S-GW related to the involved operator on which congestion occurs, so that the S-GW sends the congestion notification message to the P-GW/GGSN.

The RAN device further includes:
a fourth receiver, configured to receive a congestion notification response message sent by the P-GW/GGSN by using the S-GW.

Further, the transmitter 42 is further configured to:
send a congestion relief notification message to the S-GW when the processor 41 detects that a congestion situation of the involved operator on which congestion occurs in the RAN device is relieved, so that the S-GW sends the congestion relief notification message to the P-GW/GGSN; and
the fourth receiver is further configured to receive a congestion relief response message sent by the P-GW/GGSN by using the S-GW.

The apparatus in this embodiment may be configured to execute the technical solution in the method embodiment shown in FIG. 2. Implementation principles and technical effects thereof are similar, and details are not described herein again.

According to the RAN device provided in this embodiment of the present invention, a processor detects occurrence of congestion according to resource usage of an involved operator; when the RAN device detects that congestion occurs on one or more involved operators, a transmitter sends a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

A communications system provided in an embodiment of the present invention includes the core network device shown in FIG. 9 and the RAN device shown in FIG. 10.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A congestion control method, comprising:
receiving (S101), by a core network device, a congestion notification message sent when a radio access network, RAN, device detects that congestion occurs on one or more involved operators, wherein the congestion notification message comprises an identifier of the involved operator on which congestion occurs, and the involved operator is a mobile virtual network operator, MVNO, or an operator that shares an operator network; and
performing (S102), by the core network device according to the congestion notification message, congestion control on the involved operator corresponding to the identifier of the involved operator.

2. The method according to claim 1, wherein the congestion notification message further comprises any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

3. The method according to claim 2, wherein the core network device is a mobility management entity, MME, /serving GPRS support node, SGSN, and the receiving (S101), by a core network device, a congestion notification message sent when a RAN device detects that congestion occurs on one or more involved operators comprises:
receiving, by the MME/SGSN, the congestion notification message sent when the RAN device detects that congestion occurs on the one or more involved operators; and
recording, by the MME/SGSN, the congestion notification message, and sending a congestion notification response message to the RAN device; and
the performing (S102), by the core network device according to the congestion notification message, congestion control on the involved operator corresponding to the identifier of the involved operator comprises:
receiving, by the MME/SGSN, an access request sent by user equipment UE by using the RAN device, wherein the access request comprises information about an involved operator to which the UE belongs; and
sending, by the MME/SGSN, an access reject message to the UE according to the information about the involved operator comprised in the access request and the congestion notification message.

4. The method according to claim 3, wherein the access request is an attach request on a 4G network, or
the access request is a service request initiated by the UE on a 4G network, or
the access request is a tracking area update request on a 4G network, or
the access request is a routing area update request on a 4G network, or
the access request is a primary/secondary packet data protocol, PDP, context setup or modify request initiated by the UE on a 2G/3G network; and
the access reject message further comprises: an access reject cause and idle cell indication information, wherein the idle cell indication information is used for the UE to choose to access an idle cell indicated by the idle cell indication information.

5. The method according to claim 2, wherein the core network device comprises an MME/SGSN, a serving gateway, S-GW, a packet data network gateway, P-GW, /gateway GPRS support node, GGSN, and a policy and charging rules function, PCRF, entity, and the receiving (S101), by a core network device, a congestion notification message sent when a RAN device detects that congestion occurs on one or more involved operators comprises:
receiving, by the MME/SGSN, the congestion notification message sent when the RAN device detects that congestion occurs on the one or more involved operators; and
recording, by the MME/SGSN, the congestion notification message, and sending a congestion notification response message to the RAN device; and
the performing (S102), by the core network device according to the congestion notification message, congestion control on the involved operator corresponding to the identifier of the involved operator comprises:
sending, by the PCRF, an IP-connectivity access network, IP-CAN, session modify request to the P-GW/GGSN;
initiating, by the P-GW/GGSN, a bearer setup/modify request to the MME/SGSN according to the IP-CAN session modify request by using the S-GW, wherein the bearer setup/modify request comprises international mobile subscriber identity, IMSI, information of UE/an identifier of an involved operator to which UE belongs; and
rejecting, by the MME/SGSN, the bearer setup/modify request according to the IMSI information/the identifier of the involved operator and the congestion notification message.

6. The method according to claim 2, wherein the core network device comprises an MME/SGSN, an S-GW, a P-GW/GGSN, and a PCRF, and the receiving (S101), by a core network device, a congestion notification message sent when a radio access network RAN device detects that congestion occurs on one or more involved operators comprises:
receiving, by the MME/SGSN, the congestion notification message sent when the RAN device detects that congestion occurs on the one or more involved operators;
sending, by the MME/SGSN, a bearer update request message to the P-GW/GGSN by using the S-GW, wherein the bearer update request message comprises content of the congestion notification message;
receiving, by the P-GW/GGSN, the bearer update request message; and
recording, by the P-GW/GGSN, the bearer update request message, and sending a congestion notification response message to the RAN device by using the S-GW and the MME/SGSN; and
the performing (S102), by the core network device according to the congestion notification message, congestion control on the involved operator corresponding to the identifier of the involved operator comprises:
sending, by the PCRF, an IP-connectivity access network, IP-CAN, session modify request to the P-GW/GGSN; and
determining, by the P-GW/GGSN, according to a type of the congestion notification message and a type of the IP-CAN session modify request, to reject the IP-CAN session modify request.

7. The method according to claim 2, wherein the core network device comprises an S-GW, a P-GW/GGSN, and a PCRF, and the receiving (S101), by a core network device, a congestion notification message sent when a RAN device detects that congestion occurs on one or more involved operators comprises:
receiving, by the P-GW/GGSN by using the S-GW, the congestion notification message sent when the RAN device detects that congestion occurs on the one or more involved operators; and
recording, by the P-GW/GGSN, the congestion notification message, and sending a congestion notification response message to the RAN device by using the S-GW; and
the performing (S102), by the core network device according to the congestion notification message, congestion control on the involved operator corresponding to the identifier of the involved operator comprises:
sending, by the PCRF, an IP-CAN session modify request to the P-GW/GGSN; and
determining, by the P-GW/GGSN, according to a type of the congestion notification message and a type of the IP-CAN session modify request, to reject the IP-CAN session modify request.

8. A core network device, comprising:
a receiving module (11), configured to receive a congestion notification message sent when a radio access network, RAN, device detects that congestion occurs on one or more involved operators, wherein the congestion notification message comprises an identifier of the involved operator on which congestion occurs, and the involved operator is a mobile virtual network operator, MVNO, or an operator that shares an operator network; and
a processing module (12), configured to perform, according to the congestion notification message, congestion control on the involved operator corresponding to the identifier of the involved operator.

9. The core network device according to claim 8, wherein the congestion notification message further comprises any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

10. The core network device according to claim 9, wherein the core network device is a mobility management entity, MME, /serving GPRS support node, SGSN, and the MME/SGSN comprises:
a first receiving module, configured to receive the congestion notification message sent when the RAN device detects that congestion occurs on the one or more involved operators;
a first sending module, configured to: record the congestion notification message, and send a congestion notification response message to the RAN device; wherein
the first receiving module is further configured to receive an access request sent by user equipment UE by using the RAN device, wherein the access request comprises information about a to-be-accessed involved operator; and
a first processing module, configured to send an access reject message to the UE according to the information about the involved operator comprised in the access request and the congestion notification message.

11. The core network device according to claim 10, wherein the access request is an attach request on a 4G network, or
the access request is a service request initiated by the UE on a 4G network, or
the access request is a tracking area update request on a 4G network, or
the access request is a routing area update request on a 4G network, or
the access request is a primary/secondary PDP context setup or modify request initiated by the UE on a 2G/3G network; and
the access reject message further comprises: an access reject cause and idle cell indication information, wherein the idle cell indication information is used for the UE to choose to access an idle cell indicated by the idle cell indication information.

12. The core network device according to claim 9, wherein the core network device comprises an MME/SGSN, a serving gateway, S-GW, a packet data network gateway, P-GW, /gateway GPRS support node, GGSN, and a policy and charging rules function, PCRF, entity, and the MME/SGSN comprises:
a second receiving module, configured to receive the congestion notification message sent when the RAN device detects that congestion occurs on the one or more involved operators; and
a second sending module, configured to: record the congestion notification message, and send a congestion notification response message to the RAN device;
the PCRF comprises:
a third sending module, configured to send an IP-connectivity access network, IP-CAN, session modify request to the P-GW/GGSN;
the P-GW/GGSN comprises:
a fourth sending module, configured to initiate a bearer setup/modify request to the MME/SGSN according to the IP-CAN session modify request by using the S-GW, wherein the bearer setup/modify request comprises international mobile subscriber identity IMSI information of UE/an identifier of an involved operator to which UE belongs; and
the MME/SGSN further comprises:
a second processing module, configured to reject the bearer setup/modify request according to the IMSI information/the identifier of the involved operator and the congestion notification message.

13. The core network device according to claim 9, wherein the core network device comprises an MME/SGSN, an S-GW, a P-GW/GGSN, and a PCRF, and the MME/SGSN comprises:
a third receiving module, configured to receive the congestion notification message sent when the RAN device detects that congestion occurs on the one or more involved operators; and
a fifth sending module, configured to send a bearer update request message to the P-GW/GGSN by using the S-GW, wherein the bearer update request message comprises content of the congestion notification message;
the P-GW/GGSN comprises:
a fourth receiving module, configured to receive the bearer update request message; and
a sixth sending module, configured to: record the bearer update request message, and send a congestion notification response message to the RAN device by using the S-GW and the MME/SGSN;
the PCRF comprises:
a seventh sending module, configured to send an IP-connectivity access network, IP-CAN, session modify request to the P-GW/GGSN; and
the P-GW/GGSN further comprises:
a third processing module, configured to determine, according to a type of the congestion notification message and a type of the IP-CAN session modify request, to reject the IP-CAN session modify request.

14. The core network device according to claim 9, wherein the core network device comprises an S-GW, a P-GW/GGSN, and a PCRF, and the P-GW/GGSN comprises:
a fifth receiving module, configured to receive, by using the S-GW, the congestion notification message sent when the RAN device detects that congestion occurs on the one or more involved operators; and
a seventh sending module, configured to: record the congestion notification message, and send a congestion notification response message to the RAN device by using the S-GW;
the PCRF comprises:
an eighth sending module, configured to send an IP-CAN session modify request to the P-GW/GGSN; and
the P-GW/GGSN comprises:
a fourth processing module, configured to determine, according to a type of the congestion notification message and a type of the IP-CAN session modify request, to reject the IP-CAN session modify request.

15. A communications system, comprising a core network device according to any one of claims 8 to 14 and a RAN device, wherein the RAN device comprising:
a detection module, configured to detect occurrence of congestion according to resource usage of an involved operator, wherein the involved operator is a mobile virtual network operator, MVNO, or an operator that shares an operator network; and
a sending module, configured to: when the detection module detects that congestion occurs on one or more involved operators, send a congestion notification message to a core network device related to the involved operator on which congestion occurs, wherein the congestion notification message comprises an identifier of the involved operator on which congestion occurs and is used for the core network device to perform congestion control on the involved operator corresponding to the identifier of the involved operator.

## Patentansprüche

1. Überlastungsregelungsverfahren, umfassend:
Empfangen (S101), durch eine Kernnetzvorrichtung, einer Überlastungsbenachrichtigung, die gesendet wird, wenn eine RAN(Radio Access Network, Funkzugangsnetz)-Vorrichtung erkennt, dass eine Überlastung bei einem oder mehreren beteiligten Betreibern auftritt, wobei die Überlastungsbenachrichtigung eine Kennung des beteiligten Betreibers umfasst, bei dem die Überlastung auftritt, und der beteiligte Betreiber ein virtueller Mobilfunknetzbetreiber (Mobile Virtual Network Operator, MVNO) oder ein Betreiber ist, der ein Betreibernetz teilt; und
Durchführen (S102), durch die Kernnetzvorrichtung, gemäß der Überlastungsbenachrichtigung, einer Überlastungsregelung beim beteiligten Betreiber, der der Kennung des beteiligten Betreibers entspricht.

2. Verfahren gemäß Anspruch 1, wobei die Überlastungsbenachrichtigung ferner ein beliebiges oder eine Kombination der Folgenden umfasst:
eine Überlastungsursache des beteiligten Betreibers, bei dem die Überlastung auftritt, Ressourcennutzung, in einer überlasteten Zelle, des beteiligten Betreibers, bei dem die Überlastung auftritt, Informationen über eine andere verfügbare Zelle der RAN-Vorrichtung oder einer benachbarten RAN-Vorrichtung der RAN-Vorrichtung und Ressourcennutzung, in der anderen verfügbaren Zelle der RAN-Vorrichtung oder der benachbarten RAN-Vorrichtung der RAN-Vorrichtung, des beteiligten Betreibers, der der Kennung des beteiligten Betreibers entspricht.

3. Verfahren gemäß Anspruch 2, wobei die Kernnetzvorrichtung eine MME (Mobilitätsmanagement-Entität) bzw. ein SGSN (Serving GPRS Support Node, bedienender GPRS-Unterstützungsknoten) ist und das Empfangen (S101), durch eine Kernnetzvorrichtung, einer Überlastungsbenachrichtigung, die gesendet wird, wenn eine RAN-Vorrichtung erkennt, dass eine Überlastung bei einem oder mehreren beteiligten Betreibern auftritt, umfasst:
Empfangen, durch die MME bzw. den SGSN, der Überlastungsbenachrichtigung, die gesendet wird, wenn die RAN-Vorrichtung erkennt, dass eine Überlastung bei dem einen oder den mehreren beteiligten Betreibern auftritt; und
Aufzeichnen, durch die MME bzw. den SGSN, der Überlastungsbenachrichtigung und Senden einer Überlastungsbenachrichtigungs-Antwortnachricht an die RAN-Vorrichtung; und
das Durchführen (S102), durch die Kernnetzvorrichtung gemäß der Überlastungsbenachrichtigung, einer Überlastungsregelung beim beteiligten Betreiber, der der Kennung des beteiligten Betreibers entspricht, umfasst:
Empfangen, durch die MME bzw. den SGSN, einer Zugriffsanforderung, die durch Benutzer-Equipment (User Equipment, UE) gesendet wird, unter Verwendung der RAN-Vorrichtung, wobei die Zugriffsanforderung Informationen über einen beteiligten Betreiber umfasst, zu dem das UE gehört; und
Senden, durch die MME bzw. den SGSN, einer Zugriffsverweigerungsnachricht an das UE gemäß den Informationen über den beteiligten Betreiber, die in der Zugriffsanforderung und der Überlastungsbenachrichtigung enthalten sind.

4. Verfahren gemäß Anspruch 3, wobei die Zugriffsanforderung eine Ankopplungsanforderung in einem 4G-Netz ist, oder
die Zugriffsanforderung eine durch das UE initiierte Dienstanforderung in einem 4G-Netz ist, oder
die Zugriffsanforderung eine Anforderung zur Verfolgungsbereichsaktualisierung in einem 4G-Netz ist, oder
die Zugriffsanforderung eine Anforderung zur Routingbereichsaktualisierung in einem 4G-Netz ist, oder
die Zugriffsanforderung eine durch das UE initiierte Aufbau-/Änderungsanforderung für den primären/sekundären PDP(Paketdatenprotokoll)-Kontext in einem 2G/3G-Netz ist; und
die Zugriffsverweigerungsnachricht ferner umfasst: einen Zugriffsverweigerungsgrund und Informationen zum Anzeigen ungenutzter Zellen, wobei die Informationen zum Anzeigen ungenutzter Zellen für die Entscheidung des UE verwendet werden, auf eine ungenutzte Zelle zuzugreifen, die durch die Informationen zum Anzeigen ungenutzter Zellen angezeigt wird.

5. Verfahren gemäß Anspruch 2, wobei die Kernnetzvorrichtung eine MME bzw. einen SGSN, einen bedienenden Netzübergang (Serving Gateway, S-GW), einen Paketdatennetzübergang (Packet Data Network Gateway, P-GW) bzw. einen Netzübergang-GPRS-Unterstützungsknoten (Gateway GPRS Support Node, GGSN) und eine Vorschriften- und Vergebührungsregelfunktions(Policy and Charging Rules Function, PCRF)-Entität umfasst und das Empfangen (S101), durch eine Kernnetzvorrichtung, einer Überlastungsbenachrichtigung, die gesendet wird, wenn eine RAN-Vorrichtung erkennt, dass eine Überlastung bei einem oder mehreren beteiligten Betreibern auftritt, umfasst:
Empfangen, durch die MME bzw. den SGSN, der Überlastungsbenachrichtigung, die gesendet wird, wenn die RAN-Vorrichtung erkennt, dass eine Überlastung bei dem einen oder den mehreren beteiligten Betreibern auftritt;
und
Aufzeichnen, durch die MME bzw. den SGSN, der Überlastungsbenachrichtigung und Senden einer Überlastungsbenachrichtigungs-Antwortnachricht an die RAN-Vorrichtung; und
das Durchführen (S102), durch die Kernnetzvorrichtung gemäß der Überlastungsbenachrichtigung, einer Überlastungsregelung beim beteiligten Betreiber, der der Kennung des beteiligten Betreibers entspricht, umfasst:
Senden, durch die PCRF, einer IP-CAN(IP-Connectivity Access Network, IP-Konnektivitätszugangsnetz)-Sitzungsänderungsanforderung an den P-GW bzw. den GGSN;
Initiieren, durch den P-GW bzw. den GGSN, einer Trägereinrichtungs-/Trägeränderungsanforderung an die MME bzw. den SGSN gemäß der IP-CAN-Sitzungsänderungsanforderung unter Verwendung des S-GW, wobei die Trägereinrichtungs-/Trägeränderungsanforderung IMSI(International Mobile Subscriber Identity, internationale Mobilteilnehmerkennung)-Informationen des UE bzw. eine Kennung eines beteiligten Betreibers umfasst, zu dem das UE gehört; und Zurückweisen, durch die MME bzw. den SGSN, der Trägereinrichtungs-/Trägeränderungsanforderung gemäß den IMSI-Informationen bzw. der Kennung des beteiligten Betreibers und der Überlastungsbenachrichtigung.

6. Verfahren gemäß Anspruch 2, wobei die Kernnetzvorrichtung eine MME bzw. einen SGSN, einen S-GW, einen P-GW bzw. einen GGSN und eine PCRF umfasst und das Empfangen (S101), durch eine Kernnetzvorrichtung, einer Überlastungsbenachrichtigung, die gesendet wird, wenn eine RAN(Radio Access Network, Funkzugangsnetz)-Vorrichtung erkennt, dass eine Überlastung bei einem oder mehreren beteiligten Betreibern auftritt, umfasst:
Empfangen, durch die MME bzw. den SGSN, der Überlastungsbenachrichtigung, die gesendet wird, wenn die RAN-Vorrichtung erkennt, dass eine Überlastung bei dem einen oder den mehreren beteiligten Betreibern auftritt;
Senden, durch die MME bzw. den SGSN, einer Trägeraktualisierungsanforderungs-Nachricht an den P-GW bzw. den GGSN unter Verwendung des S-GW, wobei die Trägeraktualisierungsanforderungs-Nachricht Inhalte der Überlastungsbenachrichtigung umfasst;
Empfangen, durch den P-GW bzw. den GGSN, der Trägeraktualisierungsanforderungs-Nachricht; und
Aufzeichnen, durch den P-GW bzw. den GGSN, der Trägeraktualisierungsanforderungs-Nachricht und Senden einer Überlastungsbenachrichtigungs-Antwortnachricht an die RAN-Vorrichtung unter Verwendung des S-GW und der MME bzw. des SGSN; und
das Durchführen (S102), durch die Kernnetzvorrichtung, gemäß der Überlastungsbenachrichtigung, einer Überlastungsregelung beim beteiligten Betreiber, der der Kennung des beteiligten Betreibers entspricht, umfasst:
Senden, durch die PCRF, einer IP-CAN(IP-Connectivity Access Network, IP-Konnektivitätszugangsnetz)-Sitzungsänderungsanforderung an den P-GW bzw. den GGSN; und
Bestimmen, durch den P-GW bzw. den GGSN, gemäß einem Typ der Überlastungsbenachrichtigung und einem Typ der IP-CAN-Sitzungsänderungsanforderung, die IP-CAN-Sitzungsänderungsanforderung zurückzuweisen.

7. Verfahren gemäß Anspruch 2, wobei die Kernnetzvorrichtung einen S-GW, einen P-GW bzw. einen GGSN und eine PCRF umfasst und das Empfangen (S101), durch eine Kernnetzvorrichtung, einer Überlastungsbenachrichtigung, die gesendet wird, wenn eine RAN-Vorrichtung erkennt, dass eine Überlastung bei einem oder mehreren beteiligten Betreibern auftritt, umfasst:
Empfangen, durch den P-GW bzw. den GGSN unter Verwendung des S-GW, der Überlastungsbenachrichtigung, die gesendet wird, wenn die RAN-Vorrichtung erkennt, dass eine Überlastung bei dem einen oder den mehreren beteiligten Betreibern auftritt; und
Aufzeichnen, durch den P-GW bzw. den GGSN, der Überlastungsbenachrichtigung und Senden einer Überlastungsbenachrichtigungs-Antwortnachricht an die RAN-Vorrichtung unter Verwendung des S-GW; und
das Durchführen (S102), durch die Kernnetzvorrichtung gemäß der Überlastungsbenachrichtigung, einer Überlastungsregelung beim beteiligten Betreiber, der der Kennung des beteiligten Betreibers entspricht, umfasst:
Senden, durch die PCRF, einer IP-CAN-Sitzungsänderungsanforderung an den P-GW bzw. den GGSN; und
Bestimmen, durch den P-GW bzw. den GGSN, gemäß einem Typ der Überlastungsbenachrichtigung und einem Typ der IP-CAN-Sitzungsänderungsanforderung, die IP-CAN-Sitzungsänderungsanforderung zurückzuweisen.

8. Kernnetzvorrichtung, umfassend:
ein Empfangsmodul (11), das dafür ausgelegt ist, eine Überlastungsbenachrichtigung zu empfangen, die gesendet wird, wenn eine RAN(Radio Access Network, Funkzugangsnetz)-Vorrichtung erkennt, dass eine Überlastung bei einem oder mehreren beteiligten Betreibern auftritt, wobei die Überlastungsbenachrichtigung eine Kennung des beteiligten Betreibers umfasst, bei dem die Überlastung auftritt, und der beteiligte Betreiber ein virtueller Mobilfunknetzbetreiber (Mobile Virtual Network Operator, MVNO) oder ein Betreiber ist, der ein Betreibernetz teilt; und
ein Verarbeitungsmodul (12), das dafür ausgelegt ist, gemäß der Überlastungsbenachrichtigung eine Überlastungsregelung beim beteiligten Betreiber durchzuführen, der der Kennung des beteiligten Betreibers entspricht.

9. Kernnetzvorrichtung gemäß Anspruch 8, wobei die Überlastungsbenachrichtigung ferner ein beliebiges oder eine Kombination der Folgenden umfasst:
eine Überlastungsursache des beteiligten Betreibers, bei dem die Überlastung auftritt, Ressourcennutzung, in einer überlasteten Zelle, des beteiligten Betreibers, bei dem die Überlastung auftritt, Informationen über eine andere verfügbare Zelle der RAN-Vorrichtung oder eine benachbarte RAN-Vorrichtung der RAN-Vorrichtung und Ressourcennutzung, in der anderen verfügbaren Zelle der RAN-Vorrichtung oder der benachbarten RAN-Vorrichtung der RAN-Vorrichtung, des beteiligten Betreibers, der der Kennung des beteiligten Betreibers entspricht.

10. Netzvorrichtung gemäß Anspruch 9, wobei die Kernnetzvorrichtung eine MME (Mobilitätsmanagement-Entität) bzw. ein SGSN (Serving GPRS Support Node, bedienender GPRS-Unterstützungsknoten) ist und die MME bzw. der SGSN umfasst:
ein erstes Empfangsmodul, das dafür ausgelegt ist, die Überlastungsbenachrichtigung zu empfangen, die gesendet wird, wenn die RAN-Vorrichtung erkennt, dass eine Überlastung bei dem einen oder den mehreren beteiligten Betreibern auftritt;
ein erstes Sendemodul, das ausgelegt ist zum: Aufzeichnen der Überlastungsbenachrichtigung und Senden einer Überlastungsbenachrichtigungs-Antwortnachricht an die RAN-Vorrichtung; wobei
das erste Empfangsmodul ferner dafür ausgelegt ist, eine Zugriffsanforderung, die durch Benutzer-Equipment (User Equipment, UE) gesendet wird, unter Verwendung der RAN-Vorrichtung zu empfangen, wobei die Zugriffsanforderung Informationen über einen beteiligten Betreiber umfasst, auf den zugegriffen werden soll; und
ein erstes Verarbeitungsmodul, das dafür ausgelegt ist, eine Zugriffsverweigerungsnachricht an das UE gemäß den Informationen über den beteiligten Betreiber, die in der Zugriffsanforderung und der Überlastungsbenachrichtigung enthalten sind, zu senden.

11. Kernnetzvorrichtung gemäß Anspruch 10, wobei die Zugriffsanforderung eine Ankopplungsanforderung in einem 4G-Netz ist, oder
die Zugriffsanforderung eine durch das UE initiierte Dienstanforderung in einem 4G-Netz ist, oder
die Zugriffsanforderung eine Anforderung zur Verfolgungsbereichsaktualisierung in einem 4G-Netz ist, oder
die Zugriffsanforderung eine Anforderung zur Routingbereichsaktualisierung in einem 4G-Netz ist, oder
die Zugriffsanforderung eine durch das UE initiierte Aufbau-/Änderungsanforderung für den primären/sekundären PDP-Kontext in einem 2G/3G-Netz ist; und
die Zugriffsverweigerungsnachricht ferner umfasst: einen Zugriffsverweigerungsgrund und Informationen zum Anzeigen ungenutzter Zellen, wobei die Informationen zum Anzeigen ungenutzter Zellen für die Entscheidung des UE verwendet werden, auf eine ungenutzte Zelle zuzugreifen, die durch die Informationen zum Anzeigen ungenutzter Zellen angezeigt wird.

12. Kernnetzvorrichtung gemäß Anspruch 9, wobei die Kernnetzvorrichtung eine MME bzw. einen SGSN, einen bedienenden Netzübergang (Serving Gateway, S-GW), einen Paketdatennetzübergang (Packet Data Network Gateway, P-GW) bzw. einen Netzübergang-GPRS-Unterstützungsknoten (Gateway GPRS Support Node, GGSN) und eine Vorschriften- und Vergebührungsregelfunktions(Policy and Charging Rules Function, PCRF)-Entität umfasst und die MME bzw. der SGSN umfasst:
ein zweites Empfangsmodul, das dafür ausgelegt ist, die Überlastungsbenachrichtigung zu empfangen, die gesendet wird, wenn die RAN-Vorrichtung erkennt, dass eine Überlastung bei dem einen oder den mehreren beteiligten Betreibern auftritt; und
ein zweites Sendemodul, das ausgelegt ist zum: Aufzeichnen der Überlastungsbenachrichtigung und Senden einer Überlastungsbenachrichtigungs-Antwortnachricht an die RAN-Vorrichtung;
die PCRF umfasst:
ein drittes Sendemodul, das dafür ausgelegt ist, eine IP-CAN(IP-Connectivity Access Network, IP-Konnektivitätszugangsnetz)-Sitzungsänderungsanforderung an den P-GW bzw. den GGSN zu senden;
der P-GW bzw. der GGSN umfasst:
ein viertes Sendemodul, das dafür ausgelegt ist, eine Trägereinrichtungs-/Trägeränderungsanforderung an die MME bzw. den SGSN gemäß der IP-CAN-Sitzungsänderungsanforderung unter Verwendung des S-GW zu initiieren, wobei die Trägereinrichtungs-/Trägeränderungsanforderung IMSI(International Mobile Subscriber Identity, internationale Mobilteilnehmerkennung)-Informationen des UE bzw. eine Kennung eines beteiligten Betreibers umfasst, zu dem das UE gehört; und
die MME bzw. der SGSN ferner umfasst:
ein zweites Verarbeitungsmodul, das dafür ausgelegt ist, die Trägereinrichtungs-/Trägeränderungsanforderung gemäß den IMSI-Informationen bzw. der Kennung des beteiligten Betreibers und der Überlastungsbenachrichtigung zurückzuweisen.

13. Kernnetzvorrichtung gemäß Anspruch 9, wobei die Kernnetzvorrichtung eine MME bzw. einen SGSN, einen S-GW, einen P-GW bzw. einen GGSN und eine PCRF umfasst und die MME bzw. der SGSN umfasst:
ein drittes Empfangsmodul, das dafür ausgelegt ist, die Überlastungsbenachrichtigung zu empfangen, die gesendet wird, wenn die RAN-Vorrichtung erkennt, dass eine Überlastung bei dem einen oder den mehreren beteiligten Betreibern auftritt; und
ein fünftes Sendemodul, das dafür ausgelegt ist, eine Trägeraktualisierungsanforderungs-Nachricht an den P-GW bzw. den GGSN unter Verwendung des S-GW zu senden, wobei die Trägeraktualisierungsanforderungs-Nachricht Inhalte der Überlastungsbenachrichtigung umfasst;
der P-GW bzw. der GGSN umfasst:
ein viertes Empfangsmodul, das dafür ausgelegt ist, die Trägeraktualisierungsanforderungs-Nachricht zu empfangen; und
ein sechstes Sendemodul, das dafür ausgelegt ist, die Trägeraktualisierungsanforderungs-Nachricht aufzuzeichnen und eine Überlastungsbenachrichtigungs-Antwortnachricht an die RAN-Vorrichtung unter Verwendung des S-GW und der MME bzw. des SGSN zu senden;
die PCRF umfasst:
ein siebtes Sendemodul, das dafür ausgelegt ist, eine IP-CAN(IP-Connectivity Access Network, IP-Konnektivitätszugangsnetz)-Sitzungsänderungsanforderung an den P-GW bzw. den GGSN zu senden; und
der P-GW bzw. der GGSN ferner umfasst:
ein drittes Verarbeitungsmodul, das dafür ausgelegt ist, gemäß einem Typ der Überlastungsbenachrichtigung und einem Typ der IP-CAN-Sitzungsänderungsanforderung zu bestimmen, die IP-CAN-Sitzungsänderungsanforderung zurückzuweisen.

14. Kernnetzvorrichtung gemäß Anspruch 9, wobei die Kernnetzvorrichtung einen S-GW, einen P-GW bzw. einen GGSN und eine PCRF umfasst und der P-GW bzw. der GGSN umfasst:
ein fünftes Empfangsmodul, das dafür ausgelegt ist, unter Verwendung des S-GW die Überlastungsbenachrichtigung zu empfangen, die gesendet wird, wenn die RAN-Vorrichtung erkennt, dass eine Überlastung bei dem einen oder den mehreren beteiligten Betreibern auftritt; und
ein siebtes Sendemodul, das ausgelegt ist zum: Aufzeichnen der Überlastungsbenachrichtigung und Senden einer Überlastungsbenachrichtigungs-Antwortnachricht an die RAN-Vorrichtung unter Verwendung des S-GW;
die PCRF umfasst:
ein achtes Sendemodul, das dafür ausgelegt ist, eine IP-CAN-Sitzungsänderungsanforderung an den P-GW bzw. den GGSN zu senden; und
der P-GW bzw. der GGSN umfasst:
ein viertes Verarbeitungsmodul, das dafür ausgelegt ist, gemäß einem Typ der Überlastungsbenachrichtigung und einem Typ der IP-CAN-Sitzungsänderungsanforderung zu bestimmen, die IP-CAN-Sitzungsänderungsanforderung zurückzuweisen.

15. Kommunikationssystem, das eine Kernnetzvorrichtung gemäß einem der Ansprüche 8 bis 14 und eine RAN-Vorrichtung umfasst, wobei die RAN-Vorrichtung umfasst:
ein Erkennungsmodul, das dafür ausgelegt ist, ein Auftreten einer Überlastung gemäß der Ressourcennutzung eines beteiligten Betreibers zu erkennen, wobei der beteiligte Betreiber ein virtueller Mobilfunknetzbetreiber (Mobile Virtual Network Operator, MVNO) oder ein Betreiber ist, der ein Betreibernetz teilt; und
ein Sendemodul, das ausgelegt ist zum: wenn das Erkennungsmodul erkennt, dass eine Überlastung bei einem oder mehreren beteiligten Betreibern auftritt, Senden einer Überlastungsbenachrichtigung an eine Kernnetzvorrichtung, die zum beteiligten Betreiber gehört, bei dem die Überlastung auftritt, wobei die Überlastungsbenachrichtigung eine Kennung des beteiligten Betreibers umfasst, bei dem die Überlastung auftritt, und verwendet wird, damit die Kernnetzvorrichtung eine Überlastungsregelung beim beteiligten Betreiber durchführt, der der Kennung des beteiligten Betreibers entspricht.

## Revendications

1. Procédé de régulation de congestion, consistant à :
recevoir (S101), par un dispositif de réseau central, un message de notification de congestion envoyé lorsqu'un dispositif de réseau d'accès radio, RAN, détecte que la congestion se produit sur un ou plusieurs opérateurs impliqués, dans lequel le message de notification de congestion comprend un identifiant de l'opérateur impliqué sur lequel une congestion se produit, et l'opérateur impliqué est un opérateur de réseau virtuel mobile, MVNO, ou un opérateur qui partage un réseau d'opérateurs ; et
exécuter (S102), par le dispositif de réseau central en fonction du message de notification de congestion, une régulation de congestion sur l'opérateur impliqué correspondant à l'identifiant de l'opérateur impliqué.

2. Procédé selon la revendication 1, dans lequel le message de notification de congestion comprend en outre l'un quelconque ou une combinaison de ce qui suit :
une cause de congestion de l'opérateur impliqué sur lequel la congestion se produit, une utilisation de ressources, dans une cellule congestionnée, de l'opérateur impliqué sur lequel la congestion se produit, des informations concernant une autre cellule disponible du dispositif RAN ou d'un dispositif RAN adjacent du dispositif RAN, et une utilisation de ressources, dans l'autre cellule disponible du dispositif RAN ou du dispositif RAN adjacent du dispositif RAN, de l'opérateur impliqué correspondant à l'identifiant de l'opérateur impliqué.

3. Procédé selon la revendication 2, dans lequel le dispositif de réseau central est une entité de gestion de mobilité, MME/un noeud de support GPRS de service, SGSN, et la réception (S101), par un dispositif de réseau central, d'un message de notification de congestion envoyé lorsqu'un dispositif RAN détecte qu'une congestion se produit sur un ou plusieurs opérateurs impliqués consiste à :
recevoir, par le MME/SGSN, le message de notification de congestion envoyé lorsque le dispositif RAN détecte qu'une congestion se produit sur l'un ou les plusieurs opérateurs impliqués ; et
enregistrer, par le MME/SGSN, le message de notification de congestion, et envoyer un message de réponse de notification de congestion au dispositif RAN ; et l'exécution (S102), par le dispositif de réseau central en fonction du message de notification de congestion, d'une régulation de congestion sur l'opérateur impliqué correspondant à l'identifiant de l'opérateur impliqué consiste à :
recevoir, par le MME/SGSN, une demande d'accès envoyée par un équipement utilisateur UE à l'aide du dispositif RAN, dans lequel la demande d'accès comprend des informations concernant un opérateur impliqué auquel l'UE appartient ; et
envoyer, par le MME/SGSN, un message de rejet de l'accès à l'UE en fonction des informations concernant l'opérateur impliqué compris dans la demande d'accès et le message de notification de congestion.

4. Procédé selon la revendication 3, dans lequel la demande d'accès est une demande jointe sur un réseau 4G, ou
la demande d'accès est une demande de services initiée par l'UE sur un réseau 4G, ou la demande d'accès est une demande de mise à jour d'une zone de poursuite sur un réseau 4G, ou
la demande d'accès est une demande de mise à jour d'une zone de routage sur un réseau 4G, ou
la demande d'accès est une demande de modification ou d'établissement d'un contexte d'un protocole de données par paquets, PDP, primaire/secondaire initiée par l'UE sur un réseau 2G/3G ; et
le message de rejet de l'accès comprend en outre : une cause de rejet de l'accès et des informations d'indication d'une cellule en veille, dans lequel les informations d'indication d'une cellule en veille sont utilisées pour que l'UE choisisse d'accéder à une cellule en veille indiquée par les informations d'indication d'une cellule en veille.

5. Procédé selon la revendication 2, dans lequel le dispositif de réseau central comprend un MME/SGSN, une passerelle de service, S-GW, une passerelle de réseau de données par paquets, P-GW/un noeud de support GPRS de passerelle, GGSN, et une entité de fonction de règles de politique et de facturation, PCRF, et la réception (S101), par un dispositif de réseau central, d'un message de notification de congestion envoyé lorsqu'un dispositif RAN détecte qu'une congestion se produit sur un ou plusieurs opérateurs impliqués, consiste à :
recevoir, par le MME/SGSN, le message de notification de congestion envoyé lorsque le dispositif RAN détecte que la congestion se produit sur l'un ou les plusieurs opérateurs impliqués ; et
enregistrer, par le MME/SGSN, le message de notification de congestion, et envoyer un message de réponse de notification de congestion au dispositif RAN ; et l'exécution (S102), par le dispositif de réseau central en fonction du message de notification de congestion, de la régulation de congestion sur l'opérateur impliqué correspondant à l'identifiant de l'opérateur impliqué consiste à :
envoyer, par le PCRF, une demande de modification de session d'un réseau d'accès de connectivité IP, IP-CAN, au P-GW/GGSN ;
initier, par le P-GW/GGSN, une demande de modification/d'établissement de support au MME/SGSN en fonction de la demande de modification de session IP-CAN à l'aide de la S-GW, dans lequel la demande de modification/d'établissement de support comprend des informations d'identité d'abonné mobile international, IMSI, d'un identifiant/UE d'un opérateur impliqué auquel l'UE appartient ; et
rejeter, par le MME/SGSN, la demande de modification/d'établissement de support en fonction des informations IMSI/de l'identifiant de l'opérateur impliqué et du message de notification de congestion.

6. Procédé selon la revendication 2, dans lequel le dispositif de réseau central comprend un MME/SGSN, une S-GW, un P-GW/GGSN, et un PCRF, et la réception (S101), par un dispositif de réseau central, d'un message de notification de congestion envoyé lorsqu'un dispositif de réseau d'accès radio RAN détecte qu'une congestion se produit sur un ou plusieurs opérateurs impliqués consiste à :
recevoir, par le MME/SGSN, le message de notification de congestion envoyé lorsque le dispositif RAN détecte que la congestion se produit sur l'un ou les plusieurs opérateurs impliqués ;
envoyer, par le MME/SGSN, un message de demande de mise à jour de support au P-GW/GGSN à l'aide de la S-GW, dans lequel le message de demande de mise à jour de support comprend un contenu du message de notification de congestion ;
recevoir, par le P-GW/GGSN, le message de demande de mise à jour de support ; et
enregistrer, par le P-GW/GGSN, le message de demande de mise à jour de support, et envoyer un message de réponse de notification de congestion au dispositif RAN à l'aide de la S-GW et du MME/SGSN ; et
l'exécution (S102), par le dispositif de réseau central en fonction du message de notification de congestion, de la régulation de congestion sur l'opérateur impliqué correspondant à l'identifiant de l'opérateur impliqué consiste à :
envoyer, par le PCRF, une demande de modification de session de réseau d'accès de connectivité IP, IP-CAN, au P-GW/GGSN ; et
déterminer, par le P-GW/GGSN, en fonction d'un type du message de notification de congestion et d'un type de la demande de modification de session IP-CAN, de rejeter la demande de modification de session IP-CAN.

7. Procédé selon la revendication 2, dans lequel le dispositif de réseau central comprend une S-GW, un P-GW/GGSN, et un PCRF, et la réception (S101), par un dispositif de réseau central, d'un message de notification de congestion envoyé lorsqu'un dispositif RAN détecte que la congestion se produit sur un ou plusieurs opérateurs impliqués consiste à :
recevoir, par le P-GW/GGSN à l'aide de la S-GW, le message de notification de congestion envoyé lorsque le dispositif RAN détecte que la congestion se produit sur l'un ou les plusieurs opérateurs impliqués ; et
enregistrer, par le P-GW/GGSN, le message de notification de congestion, et envoyer un message de réponse de notification de congestion au dispositif RAN à l'aide de la S-GW ; et
l'exécution (S102), par le dispositif de réseau central en fonction du message de notification de congestion, de la régulation de congestion sur l'opérateur impliqué correspondant à l'identifiant de l'opérateur impliqué consiste à :
envoyer, par le PCRF, une demande de modification de session IP-CAN au P-GW/GGSN ; et
déterminer, par le P-GW/GGSN, en fonction d'un type du message de notification de congestion et d'un type de la demande de modification de session IP-CAN, de rejeter la demande de modification de session IP-CAN.

8. Dispositif de réseau central, comprenant :
un module de réception (11), conçu pour recevoir un message de notification de congestion envoyé lorsqu'un dispositif de réseau d'accès radio, RAN, détecte que la congestion se produit sur un ou plusieurs opérateurs impliqués, dans lequel le message de notification de congestion comprend un identifiant de l'opérateur impliqué sur lequel une congestion se produit, et l'opérateur impliqué est un opérateur de réseau virtuel mobile, MVNO, ou un opérateur qui partage un réseau d'opérateurs ; et
un module de traitement (12), conçu pour exécuter, en fonction du message de notification de congestion, une régulation de congestion sur l'opérateur impliqué correspondant à l'identifiant de l'opérateur impliqué.

9. Dispositif de réseau central selon la revendication 8, dans lequel le message de notification de congestion comprend en outre l'un quelconque ou une combinaison de ce qui suit :
une cause de congestion de l'opérateur impliqué sur lequel la congestion se produit, une utilisation de ressources, dans une cellule congestionnée, de l'opérateur impliqué sur lequel la congestion se produit, des informations concernant une autre cellule disponible du dispositif RAN ou d'un dispositif RAN adjacent du dispositif RAN, et une utilisation de ressources, dans l'autre cellule disponible du dispositif RAN ou du dispositif RAN adjacent du dispositif RAN, de l'opérateur impliqué correspondant à l'identifiant de l'opérateur impliqué.

10. Dispositif de réseau central selon la revendication 9, dans lequel le dispositif de réseau central est une entité de gestion de mobilité, MME/un noeud de support GPRS de service, SGSN, et le MME/SGSN comprend :
un premier module de réception, configuré pour recevoir le message de notification de congestion envoyé lorsque le dispositif RAN détecte qu'une congestion se produit sur l'un ou les plusieurs opérateurs impliqués ;
un premier module d'envoi, configuré pour : enregistrer le message de notification de congestion, et envoyer un message de réponse de notification de congestion au dispositif RAN ; dans lequel
le premier module de réception est configuré en outre pour recevoir une demande d'accès envoyée par un équipement utilisateur UE à l'aide du dispositif RAN, dans lequel la demande d'accès comprend des informations concernant un opérateur impliqué à accéder ; et
un premier module de traitement, conçu pour envoyer un message de rejet de l'accès à l'UE en fonction des informations concernant l'opérateur impliqué compris dans la demande d'accès et le message de notification de congestion.

11. Dispositif de réseau central selon la revendication 10, dans lequel la demande d'accès est une demande jointe sur un réseau 4G, ou
la demande d'accès est une demande de services initiée par l'UE sur un réseau 4G, ou la demande d'accès est une demande de mise à jour de zone de poursuite sur un réseau 4G, ou
la demande d'accès est une demande de mise à jour d'une zone de routage sur un réseau 4G, ou
la demande d'accès est une demande de modification ou d'établissement d'un contexte PDP primaire/secondaire initiée par l'UE sur un réseau 2G/3G ; et
le message de rejet de l'accès comprend en outre : une cause de rejet de l'accès et des informations d'indication d'une cellule en veille, dans lequel les informations d'indication d'une cellule en veille sont utilisées pour que l'UE choisisse d'accéder à une cellule en veille indiquée par les informations d'indication d'une cellule en veille.

12. Dispositif de réseau central selon la revendication 9, dans lequel le dispositif de réseau central comprend un MME/SGSN, une passerelle de service, S-GW, une passerelle de réseau de données par paquets, P-GW/un noeud de support GPRS de passerelle, GGSN, et une entité de fonction de règles de politique et de facturation, PCRF, et le MME/SGSN comprend :
un deuxième module de réception, configuré pour recevoir le message de notification de congestion envoyé lorsque le dispositif RAN détecte que la congestion se produit sur l'un ou les plusieurs opérateurs impliqués ; et
un deuxième module d'envoi, configuré pour : enregistrer le message de notification de congestion, et envoyer un message de réponse de notification de congestion au dispositif RAN ;
le PCRF comprend :
un troisième module d'envoi, configuré pour envoyer une demande de modification de session d'un réseau d'accès de connectivité IP, IP-CAN, au P-GW/GGSN ;
le P-GW/GGSN comprend :
un quatrième module d'envoi, configuré pour initier une demande de modification/d'établissement de support au MME/SGSN en fonction de la demande de modification de session IP-CAN à l'aide de la S-GW, dans lequel la demande de modification/d'établissement de support comprend des informations d'identité d'abonné mobile international, IMSI, d'un identifiant/UE d'un opérateur impliqué auquel l'UE appartient ; et
le MME/SGSN comprend en outre :
un deuxième module de traitement, configuré pour rejeter la demande de modification/d'établissement de support en fonction des informations IMSI/de l'identifiant de l'opérateur impliqué et du message de notification de congestion.

13. Dispositif de réseau central selon la revendication 9, dans lequel le dispositif de réseau central comprend un MME/SGSN, une S-GW, un P-GW/GGSN, et un PCRF, et le MME/SGSN comprend :
un troisième module de réception, configuré pour recevoir le message de notification de congestion envoyé lorsque le dispositif RAN détecte que la congestion se produit sur l'un ou les plusieurs opérateurs impliqués ; et
un cinquième module d'envoi, configuré pour envoyer un message de demande de mise à jour de support au P-GW/GGSN à l'aide de la S-GW, dans lequel le message de demande de mise à jour de support comprend un contenu du message de notification de congestion ;
le P-GW/GGSN comprend :
un quatrième module de réception, configuré pour recevoir le message de demande de mise à jour de support ; et
un sixième module d'envoi, configuré pour : enregistrer le message de demande de mise à jour de support, et envoyer un message de réponse de notification de congestion au dispositif RAN à l'aide de la S-GW et du MME/SGSN ;
le PCRF comprend :
un septième module d'envoi, configuré pour envoyer une demande de modification de session de réseau d'accès de connectivité IP, IP-CAN au P-GW/GGSN ; et
le P-GW/GGSN comprend en outre :
un troisième module de traitement, configuré pour déterminer, en fonction d'un type du message de notification de congestion et d'un type de la demande de modification de session IP-CAN, de rejeter la demande de modification de session IP-CAN.

14. Dispositif de réseau central selon la revendication 9, dans lequel le dispositif de réseau central comprend une S-GW, un P-GW/GGSN, et un PCRF, et le P-GW/GGSN comprend :
un cinquième module de réception, configuré pour recevoir, à l'aide de la S-GW, le message de notification de congestion envoyé lorsque le dispositif RAN détecte que la congestion se produit sur l'un ou les plusieurs opérateurs impliqués ; et
un septième module d'envoi, configuré pour : enregistrer le message de notification de congestion, et envoyer un message de réponse de notification de congestion au dispositif RAN à l'aide de la S-GW ;
le PCRF comprend :
un huitième module d'envoi, configuré pour envoyer une demande de modification de session IP-CAN au P-GW/GGSN ; et
le P-GW/GGSN comprend :
un quatrième module de traitement, configuré pour déterminer, en fonction d'un type du message de notification de congestion et d'un type de la demande de modification de session IP-CAN, de rejeter la demande de modification de session IP-CAN.

15. Système de communications, comprenant un dispositif de réseau central selon l'une quelconque des revendications 8 à 14 et un dispositif RAN, dans lequel le dispositif RAN comprend :
un module de détection, configuré pour détecter l'occurrence d'une congestion en fonction de l'utilisation de ressources d'un opérateur impliqué, dans lequel l'opérateur impliqué est un opérateur de réseau virtuel mobile, MVNO, ou un opérateur qui partage un réseau d'opérateurs ; et
un module d'envoi, configuré pour : lorsque le module de détection détecte que la congestion se produit sur un ou plusieurs opérateurs impliqués, envoyer un message de notification de congestion à un dispositif de réseau central associé à l'opérateur impliqué sur lequel la congestion se produit, dans lequel le message de notification de congestion comprend un identifiant de l'opérateur impliqué sur lequel une congestion se produit, et est utilisé pour le dispositif de réseau central afin d'exécuter une régulation de congestion sur l'opérateur impliqué correspondant à l'identifiant de l'opérateur impliqué.
